(19) Europäisches Patentamt
European Patent Office
Office européen des brevets

(11) **EP 2 149 029 B1**

(12) **EUROPÄISCHE PATENTSCHRIFT**

(45) Veröffentlichungstag und Bekanntmachung des Hinweises auf die Patenterteilung:
**03.11.2010 Patentblatt 2010/44**

(21) Anmeldenummer: **08758368.8**

(22) Anmeldetag: **02.05.2008**

(51) Int Cl.:
*G01B 11/00* (2006.01)     *G01D 5/38* (2006.01)

(86) Internationale Anmeldenummer:
**PCT/EP2008/003552**

(87) Internationale Veröffentlichungsnummer:
**WO 2008/138501 (20.11.2008 Gazette 2008/47)**

(54) **POSITIONSMESSEINRICHTUNG**

POSITION MEASURING DEVICE

DISPOSITIF DE MESURE DE POSITION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.05.2007 DE 102007023300**

(43) Veröffentlichungstag der Anmeldung:
**03.02.2010 Patentblatt 2010/05**

(73) Patentinhaber: **Dr. Johannes Heidenhain GmbH 83301 Traunreut (DE)**

(72) Erfinder: **HOLZAPFEL, Wolfgang 83119 Obing (DE)**

(56) Entgegenhaltungen:
**EP-A- 0 482 553      EP-A- 1 734 394**
**DE-B1- 2 521 618     US-A- 3 884 580**

EP 2 149 029 B1

**Beschreibung**

Die vorliegende Erfindung betrifft eine Positionsmesseinrichtung zum Messen der Relativlage eines Objekts relativ zu einem Tool in zumindest zwei Dimensionen (X und Y).

Derartige Positionsmesseinrichtungen können z.B. für eine Waferinspektionsmaschine verwendet werden, bei der ein optisches, elektronenoptisches oder ionenoptisches Mikroskop sehr präzise über einem Siliziumwafer positioniert werden muss. Der Wafer stellt das Objekt dar, das Mikroskop ist das Tool. Statt Mikroskopen können aber auch beliebige andere Sensoren und Bearbeitungswerkzeuge als Tool dienen. Der Anwendungsbereich umfasst ganz allgemein jede hochgenaue, (zumindest) zweidimensionale Positionierung.

Für die hochgenaue Messung von eindimensionalen Positionen werden im Allgemeinen Positionsmesseinrichtungen bzw. Encoder verwendet, die einen Gittermaßstab optisch abtasten und dabei inkrementale Sinus- und Kosinussignale erzeugen. Solche Signale werden in der Auswerteelektronik interpoliert, so dass ein sehr kleiner Messschritt resultiert, der nur mehr einen kleinen Bruchteil der Signalperiode beträgt. Messschritte von Bruchteilen eines Nanometers sind dabei durchaus realisierbar.

Bei einer zweidimensionalen Positionsbestimmung in X- und Y-Richtung werden oftmals zwei senkrecht zueinander angeordnete, eindimensionale Verschiebeeinheiten verwendet, die jeweils mit einem eindimensionalen Encoder ausgerüstet sind. Dabei ist es bisher nicht möglich, das sog. Abbe-Prinzip einzuhalten, so dass durch Kippfehler in den Linearführungen Messfehler resultieren. Das Abbe-Prinzip verlangt, dass das jeweilige Messsystem koaxial zur Verschiebungsrichtung, in der gemessen werden soll, ausgerichtet ist. In der Regel sind die Abbe-Abstände, d.h. die Abstände zwischen den Messachsen der Encoder und dem Zentrum des Tools, nachfolgend als Tool Center Point TCP bezeichnet, erheblich. Die Messachse eines Encoders verläuft gemäß der hier verwendeten Festlegung durch den effektiven Messpunkt des Encoders entlang einer Messrichtung. Aber auch die Geradheitsabweichungen der Linearführungen führen zu Messfehlern, die nicht durch die Encoder erfasst werden. Beide Fehlereinflüsse sind nur teilweise reproduzierbar, so dass auch eine Maschinenkalibrierung oftmals nicht die geforderte Genauigkeit liefern kann. Typische Nicht-Reproduzierbarkeiten aufgrund von Führungsabweichungen liegen im Bereich von 100nm.

Aus diesen Gründen werden heute für hochgenaue, zweidimensionale Positionsbestimmungen Planspiegel-Laserinterferometer eingesetzt. Die zueinander senkrecht stehenden Messachsen zweier Planspiegel-Laserinterferometer werden entsprechend der Abbe-Bedingung so angeordnet, dass sie sich im ortsfesten TCP schneiden. Auf diese Weise werden alle Führungsabweichungen des XY-Tisches erfasst und haben daher keinen nennenswerten Einfluss auf die Genauigkeit mehr. In Luft betriebene Laserinterferometer haben allerdings den Nachteil, dass Schwankungen des Luftbrechungsindex zu erheblichen Messfehlern führen. So muss man bei einer Luftstrecke von 30cm selbst unter günstigen Laborbedingungen mit Fehlern von 20nm bis 50nm rechnen. Für die steigende Anzahl von Applikationen mit einer Genauigkeitsanforderung von 1 - 10nm ist dies nicht ausreichend.

Die DE 25 21 618 beschreibt eine Anordnung von zwei gekreuzten Maßstäben, die im Kreuzungspunkt optisch abgetastet werden. Der eine Maßstab trägt eine so genannte Längsteilung, d.h. ein Gitter mit Gitterstrichen parallel zur schmalen Kante der Maßstabfläche. Der zweite Maßstab ist mit einer Querteilung versehen, d.h. die Gitterstriche verlaufen parallel zur langen Kante der Maßstabfläche. Durch die senkrechte Anordnung der Längs- und Querteilung stehen die Gitterstriche zueinander parallel, so dass die Relativposition mit einer geeigneten Abtastoptik im Kreuzungspunkt erfasst werden kann.

Zur Positionserfassung gemäß der Abbe-Bedingung wird die Längsteilung in der XY-Ebene zum TCP ausgerichtet und ist wie der TCP ortsfest. Die Querteilung ist am XY-Tisch befestigt. Die zweite Messrichtung erfasst ein zweites, senkrecht angeordnetes Paar von Längs- und Querteilung, dessen Längsteilung in der XY-Ebene ebenfalls zum TCP orientiert ist. Die beiden Abtastoptiken müssen jeweils entlang der Längsteilungen verschoben werden, um stets an den Kreuzungspunkten abtasten zu können. Die DE 2521618 offenbart jedoch keine geeignete Abtastoptik, auch werden keine Hinweise gegeben, wie die Abtastoptik entlang der Längsteilung geführt werden soll. Bei genauerer Betrachtung werden die Abbe-Abstände nur in der XY-Ebene auf Null gebracht, es verbleiben aber Abbe-Abstände in Z-Richtung ungleich Null, da die Teilungen (Bezugszeichen 3 und 8 in Figur 2 der DE 2521618) und das Objekt (Bezugszeichen 6 in Figur 2 der DE 2521618) in unterschiedlichen Z-Lagen angeordnet sind. Kippungen des Tisches um die X- oder Y-Achse führen daher weiterhin zu Messfehlern.

In der EP 1 734 394 A1 werden weitere Details zu einer derartigen Messanordnung offenbart. Es werden beispielsweise Ausführungsformen für die notwendigen Führungen der Abtastköpfe entlang der Längsteilungen beschrieben. Auch in dieser Druckschrift werden keine geeigneten Abtastoptiken beschrieben. Die Abbe-Abstände in Z-Richtung werden nicht berücksichtigt, wie aus Figur 3 dieser Druckschrift ersichtlich ist.

In der WO 2007/034379 A2 werden verschiedene Abtastoptiken für derartige Positionsmesseinrichtungen beschrieben, um die Längs- und Querteilungen in derartigen Anordnungen abzutasten. Der Abbe-Abstand in Z-Richtung wird auch hier weder erwähnt noch berücksichtigt bzw. minimiert. Die vorgeschlagenen Abtastoptiken sind bei einer genaueren Analyse kaum für die Messaufgabe geeignet, da der effektive Messpunkt der Abtastoptiken, der im Folgenden als neutraler Drehpunkt (NP) des Encoders bezeichnet wird, in Z-Richtung nicht mit dem Objekt nivelliert werden kann.

Eine Analysemethode für die Lage des neutralen Drehpunkts wird weiter unten beschrieben und führt zu folgenden Ergebnissen. Der neutrale Drehpunkt der Abtastoptik gemäß Figur 5 oder 6 der WO 2007/034379 A2 liegt weit oberhalb des Gitters mit dem Bezugszeichen 5, etwa im Abstand des ersten Gitters mit dem Bezugszeichen 5 vom Gitter mit dem Bezugszeichen 4. Bei einer Abtastung gemäß der beschriebenen Anordnungen (Figur 3 der WO 2007/034379 A2) ergibt sich daher zwangsläufig ein erheblicher Abbe-Abstand in Z-Richtung. Die Abtastoptik gemäß Figur 8 der WO 2007/034379 A2 weist einen neutralen Drehpunkt in Höhe des Gitters mit dem Bezugszeichen 4 auf. Da der Spiegel mit dem Bezugszeichen 7 in Z-Richtung über die Gitterebene, die dann optimalerweise die Objektebene sein müsste, hinausragt, ist diese Anordnung nicht mit dem normalerweise geringen Abstand zwischen Tool und Objekt kompatibel, da sich das Tool und der Spiegel mit dem Bezugszeichen 7 im Wege stehen. Ähnliches gilt auch für die Abtastoptik gemäß den Figur 9 und 10 in der WO 2007/034379 A2. Der neutrale Drehpunkt der Abtastoptik gemäß Figur 11 und 12 der WO 2007/034379 A2 liegt weit unterhalb des Gitters mit dem Bezugszeichen 4, etwa im Abstand des Gitters mit dem Bezugszeichen 4 vom Gitter mit dem Bezugszeichen 5. Eine Nivellierung der Z-Lage des neutralen Drehpunkts mit dem Objekt ist hier ebenfalls nicht möglich.

Die EP 1 734 394 A1 und die WO 2007/034379 A2 beschreiben ausschließlich Abtastoptiken für derartige Positionsmesseinrichtungen, die oberhalb des feststehenden Maßstabs mit der Längsteilung angeordnet und bewegt werden.

In der nicht vorveröffentlichten EP 1 837 630 A1 sind schließlich weitere Abtastoptiken zur Abtastung von Längs- und Querteilungen beschrieben. In den diversen Ausführungsformen dieser Druckschrift finden sich ebenfalls keine Hinweise zur geeigneten Z-Lage der neutralen Drehpunkte und deren Relativlage zum Messobjekt. Als Erweiterung wird hier eine zusätzliche Messung in Z-Richtung an mindestens 3 Stellen des Tisches beschrieben, so dass alle sechs Freiheitsgrade des Tisches erfasst werden. Eine Korrektur der Kippungen Rx und Ry um die Hauptbewegungsachsen X und Y des Tisches kann damit durch eine entsprechende digitale Signalverarbeitung durchgeführt werden. Allerdings erfordert dies für die zusätzlichen Messungen von Rx und Ry einen erheblichen Mehraufwand, der nur bei sehr aufwändigen Maschinen wie z.B. Wafersteppern gerechtfertigt ist. Die zusätzliche Messung der Rx- und Ry-Kippung ist hier erforderlich, da diese Kippungen durch eigene Aktuatoren im Betrieb verändert werden müssen. Für die meisten anderen Applikationen, wie z.B. bei Wafer-Inspektionsmaschinen, werden keine Rx- und Ry-Aktuatoren verwendet, so dass man auf deren Messung grundsätzlich verzichten könnte. Allerdings verbleibt in diesem Fall wiederum die nicht ideale Lage der neutralen Drehpunkte in Richtung der Z-Achse.

Die diskutierten Druckschriften DE 25 21 618, EP 1 734 394 A1, WO 2007/034379 A2 und EP 1 837 630 A1 beschränken sich jeweils auf Maschinenkonzepte mit ortsfestem TCP. Sie geben keine Hinweise, wie andere Maschinenkonzepte mit bewegtem TCP durch gekreuzte Längs- und Querteilungen verbessert werden können.

Weiterhin muss die Interpolationsgenauigkeit der Positionsmesseinrichtungen bzw. Encoder berücksichtigt werden. Da bei Maschinen häufig die Achsrichtungen X und Y auch zugleich die Hauptbewegungsrichtungen sind, werden die Querteilungen entlang der Gitterlinien bewegt. Signalstörungen durch Gittertoleranzen führen zu Interpolationsfehlern, die nicht durch elektronische Kompensationsverfahren kompensiert werden können, da diese Kompensationsverfahren für eine ausreichende Fehlerkorrektur stets eine Phasenverschiebung der Signale und damit eine Bewegungskomponente auch in Messrichtung benötigen.

Über die vorliegende Erfindung soll eine Positionsmesseinrichtung zur mindestens zweidimensionalen Positionsbestimmung angegeben werden, die eine deutlich höhere Genauigkeit als die bekannten Systeme aus dem Stand der Technik gewährleistet. Insbesondere sollen hierbei Abtastoptiken für derartige Positionsmesseinrichtungen angegeben werden, die es erlauben, auch die Abbe-Abstände in Z-Richtung auf Null zu reduzieren.

Diese Aufgabe wird gelöst durch eine Positionsmesseinrichtung gemäß Anspruch 1.

Vorteilhafte Ausführungsformen der erfindungsgemäßen Positionsmesseinrichtung ergeben sich aus den Unteransprüchen.

Die erfindungsgemäße Positionsmesseinrichtung zum Messen der Relativlage eines Objekts relativ zu einem Tool, wobei das Tool einen Tool Center Point besitzt, besteht aus mindestens zwei gekreuzt angeordneten und zueinander in mindestens einer Bewegungsebene verschiebbaren Maßstäben und einer zugeordneten optischen Abtasteinheit, die Positionssignale für mindestens eine Messrichtung parallel zur Bewegungsebene erzeugt. Jeder Maßstab weist einen neutralen Drehpunkt aufweist, um den eine Verkippung des jeweiligen Maßstabs keine Veränderung der erfassten Position bewirkt. Durch die Abtastoptik ist sichergestellt, dass die Lage der neutralen Drehpunkte der beiden Maßstäbe übereinstimmt. Durch die Anordnung der Maßstäbe relativ zum Tool Center Point ist sichergestellt, dass die neutralen Drehpunkte der beiden Maßstäbe und der Tool Center Point in einer Ebene liegen, die parallel zur Bewegungsebene liegt

In einer möglichen Ausführung umfasst die Abtastoptik folgende Komponenten:

- einen raumfest angeordneten Maßstab mit einer Teilung,
- ein gegenüber dem raumfest angeordneten Maßstab beweglich und gekreuzt angeordneter Maßstab mit einer Teilung sowie
- eine Abtasteinheit, wobei der bewegliche Maßstab unterhalb des raumfesten Maßstabs angeordnet ist und unterhalb des beweglichen Maßstabs die Abtasteinheit angeordnet ist, so dass die neutralen Drehpunkte der beiden Maßstäbe in einem Bereich zwischen den beiden Maßstäben oder auf dem beweglichen Maßstab liegen.

Besonders vorteilhaft ist es, wenn die Lageabweichungen der neutralen Drehpunkte vom Tool Center Point senkrecht zur Bewegungsebene kleiner als 1 mm sind.

Vorzugsweise ist die Teilung des beweglichen Maßstabs auf derjenigen Maßstabseite angebracht, die dem raumfesten Maßstab zugewandt ist.

Hierbei ist besonders günstig, wenn die Teilung des beweglichen Maßstabs und der Tool Center Point in einer Ebene angeordnet sind, die parallel zur Bewegungsebene liegt.

In einer vorteilhaften Ausführungsform ist die Teilung des beweglichen Maßstabs als Durchlichtteilung ausgebildet.

Eine mögliche Ausführungsvariante der Abtasteinheit umfasst eine Lichtquelle sowie zumindest ein Photoelement, die dergestalt angeordnet sind, dass

- das von der Lichtquelle emittierte Lichtbündel an einem Auftreffort auf die Teilung des beweglichen Maßstabs trifft, wo eine Aufspaltung in mehrere Teilstrahlenbündel erfolgt,
- die aufgespaltenen Teilstrahlenbündel dann auf die Teilung des raumfesten Maßstabs auftreffen, wo eine Rückreflexion in Richtung des beweglichen Maßstabs erfolgt, wo die zurückreflektierten Teilstrahlenbündel an einem Vereinigungsort auf der Teilung des beweglichen Maßstabs überlagert und zur Interferenz gebracht werden,
- vom Vereinigungsort auf der Teilung des beweglichen Maßstabs in zumindest einer Raumrichtung Lichtbündel austreten, die auf das zumindest eine Photoelement in der Abtasteinheit gelangen, wo verschiebungsabhängig modulierte Photoströme resultieren.

Hier kann die Abtasteinheit auch mehrere Photoelemente umfassen und am Vereinigungsort auf der Teilung des beweglichen Maßstabs mehrere Lichtbündel in unterschiedlichen Raumrichtungen austreten, die auf die mehreren Photoelemente gelangen, wo mehrere verschiebungsabhängig modulierte, phasenverschobene Photoströme resultieren.

Besonders günstig erweist sich, wenn die Teilung des beweglichen Maßstabs als Phasengitter mit einer Strichbreite von 1/3 * dm und einer Phasenhöhe von 120° ausgebildet ist, wobei dm die Teilungsperiode der Teilung des beweglichen Maßstabs angibt, so dass an den Photoelementen phasenverschobene Photoströme mit einer Phasenverschiebung von 120° resultieren.

In einer möglichen Ausführungsform der erfindungsgemäßen Positionsmesseinrichtung ist die Teilung des raumfesten Maßstabs als Reflexionsteilung ausgebildet.

Günstig ist hierbei, wenn der Beleuchtungswinkel des aus der Lichtquelle austretenden Lichtbündels kleiner als 20° ist.

In einer weiteren Ausführungsform weist der raumfeste Maßstab sowohl eine Teilung als auch zumindest ein Reflektorelement aufweist, die dergestalt angeordnet sind, dass

- die aufgespaltenen Teilstrahlenbündel auf die Teilung des raumfesten Maßstabs treffen, die die Teilstrahlenbündel in Messrichtung ablenkt und quer zur Messrichtung fokussiert,
- nachfolgend die Teilstrahlenbündel durch das zumindest eine Reflektorelement reflektiert werden
- und wiederum auf die Teilung des raumfesten Maßstabs gelangen, die die Teilstrahlenbündel in Messrichtung erneut ablenkt und quer zur Messrichtung wieder kollimiert, so dass sie in Richtung des beweglichen Maßstabs zurückreflektiert werden.

Hierbei ist vorzugsweise die Teilung des raumfesten Maßstabs als diffraktive Struktur ausgebildet ist, die eine Überlagerung eines in Messrichtung ablenkenden Gitters und einer quer zur Messrichtung fokussierenden, diffraktiven Zylinderlinse darstellt.

In einer weiteren Ausführungsform umfasst der raumfeste Maßstab sowohl eine Teilung als auch ein Prisma, wobei die auf den raumfesten Maßstab einfallenden Teilstrahlenbündel zunächst auf die Teilung des raumfesten Maßstabs treffen, die die Teilstrahlenbündel in Messrichtung ablenkt, nachfolgend die Teilstrahlenbündel durch das Prisma reflektiert werden und wiederum auf die Teilung des raumfesten Maßstabs gelangen, die die Teilstrahlenbündel in Messrichtung erneut ablenkt, so dass sie in Richtung des beweglichen Maßstabs zurückreflektiert werden.

Hierbei ist vorzugsweise das Prisma als 90°-Dachkantprisma ausgebildet.

In einer weiteren Ausführungsform ist die Teilung des raumfesten Maßstabs als Rückflächen-Reflexionsteilung ausgebildet.

In einer weiteren Ausführungsform umfasst die Abtasteinheit eine Lichtquelle sowie zumindest ein Photoelement, die dergestalt angeordnet sind, dass

- das von der Lichtquelle emittierte Lichtbündel an einem Aufspaltort auf die Teilung des beweglichen Maßstabs trifft, wo eine Aufspaltung in mehrere Teilstrahlenbündel erfolgt,
- die aufgespaltenen Teilstrahlenbündel dann auf die Teilung des raumfesten Maßstabs auftreffen, wo eine Rückreflexion in Richtung des beweglichen Maßstabs erfolgt, wo die zurückreflektierten Teilstrahlenbündel versetzt zum Aufspaltort auf Teilungen des beweglichen Maßstabs treffen, die in Messrichtung ablenken und senkrecht zur Messrichtung fokussieren, um nach einer Reflexion an Reflektoren des beweglichen Maßstabs erneut durch diese Teilungen gebeugt zu werden und schließlich nach einer weiteren Beugung an der Teilung des raumfesten Maßstabs zum Vereinigungsort auf der Teilung des beweglichen Maßstabs zu gelangen, an dem in zumindest einer Raumrichtung Lichtbündel austreten, die auf das zumindest eine Photoelement in der Abtasteinheit gelangen, wo verschiebungsabhängig modulierte Photoströme resultieren.

Ferner ist es möglich, dass Teilungsstriche der Teilungen des raumfesten und des beweglichen Maßstabs unter 45° geneigt zu den Außenkanten der jeweiligen Maßstäbe angeordnet sind.

Weitere Einzelheiten und Vorteile der vorliegenden Erfindung seien anhand der nachfolgenden Beschreibung von Ausführungsbeispielen in Verbindung mit den Figuren erläutert.

Es zeigt

Fig. 1        eine Anordnung von Positionsmesseinrichtungen an einem XY- Tisch gemäß dem Stand der Technik,

Fig. 2        die Lage des neutralen Drehpunkts NPm bei einer symmetrischen Beugung an einem Maßstab mit einer Reflexionsteilung,

Fig. 3        die optimale Z-Lage der neutralen Drehpunkte NPm und NPf,

Fig. 4a       eine Frontansicht einer Abtastoptik eines ersten Ausführungsbei- spiels einer erfindungsgemäßen Positionsmesseinrichtung,

Fig. 4b       eine Queransicht der Abtastoptik des ersten Ausführungsbeispiels einer erfindungsgemäßen Positionsmesseinrichtung,

Fig. 5        eine perspektivische Ansicht der Abtastoptik aus den Figuren 4a, 4b,

Fig. 6        eine perspektivische Ansicht einer Anordnung von Positions- messeinrichtungen gemäß den Figuren 4a, 4b und 5 an einem XY- Tisch,

Fig. 7a       eine Frontansicht einer Abtastoptik eines zweiten Ausführungsbei- spiels einer erfindungsgemäßen Positionsmesseinrichtung,

Fig. 7b       eine Queransicht der Abtastoptik des zweiten Ausführungsbei- spiels einer erfindungsgemäßen Positionsmesseinrichtung,

Fig. 8a       eine detaillierte Frontansicht zur Veranschaulichung der Ablenkwir- kung des Maßstabs mit Retroreflektorwirkung des zweiten Ausfüh- rungsbeispiels einer erfindungsgemäßen Positionsmesseinrich- tung,

Fig. 8b       eine detaillierte Queransicht zur Veranschaulichung der Ablenkwir- kung des Maßstabs mit Retroreflektorwirkung des zweiten Ausfüh- rungsbeispiels einer erfindungsgemäßen Positionsmesseinrich- tung,

Fig. 9        eine Detailansicht der Struktur einer als Retroreflektorteilung ausgebildeten Teilung in der erfindungsgemäßen Positionsmess- einrichtung gemäß den Figuren 7a, 7b, 8a, 8b,

Fig. 10       eine perspektivische Ansicht einer Abtastoptik eines dritten Ausführungsbeispiels einer erfindungsgemäßen Positionsmessein- richtung;

Fig. 11a      eine Frontansicht einer Abtastoptik eines vierten Ausführungsbei- spiels einer erfindungsgemäßen Positionsmesseinrichtung,

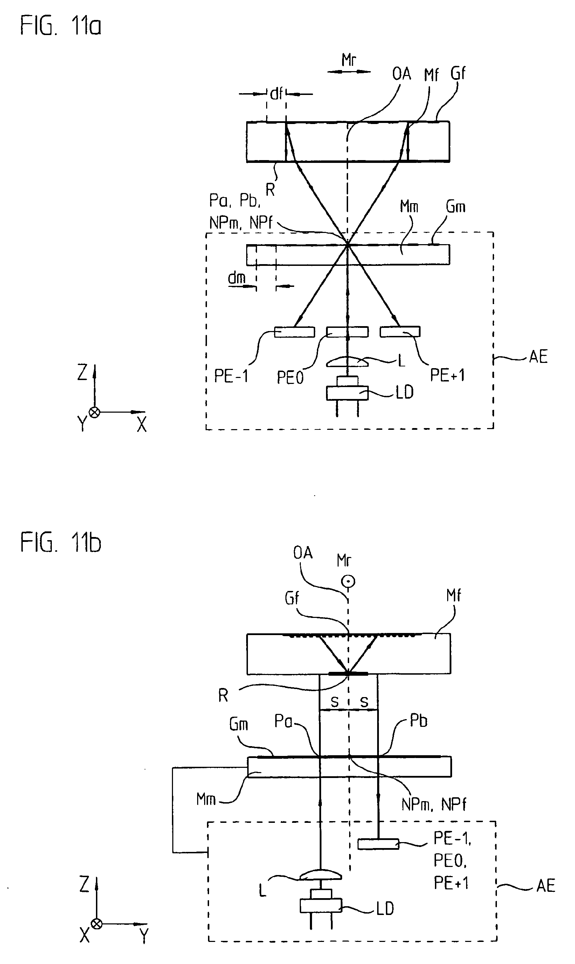

Fig. 11    b eine Queransicht der Abtastoptik des vierten Ausführungsbeispiels einer erfindungsgemäßen Positionsmesseinrichtung,

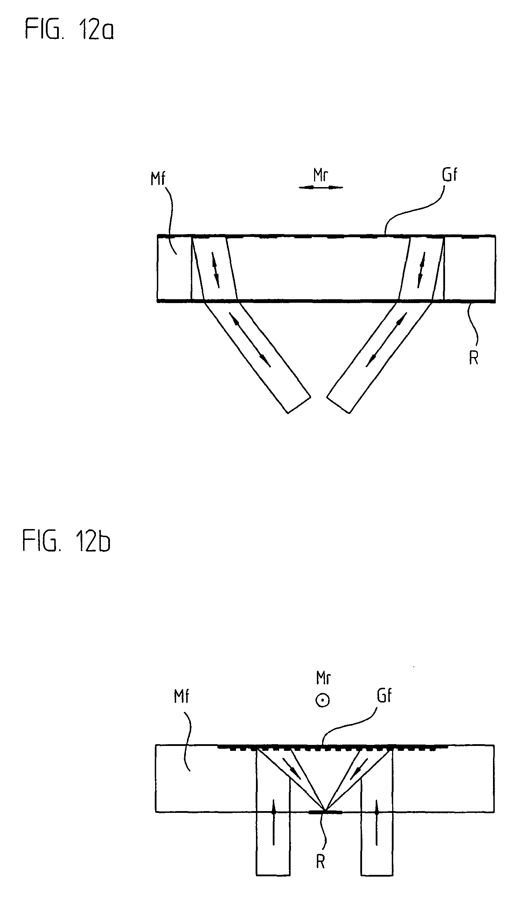

Fig. 12a    eine weitere Frontansicht zur Veranschaulichung der Ablenkwir- kung des Maßstabs aus den Figuren 11a und 11b;

Fig. 12b    eine weitere Frontansicht zur Veranschaulichung der Ablenkwir- kung des Maßstabs aus den Figuren 11a und 11b:

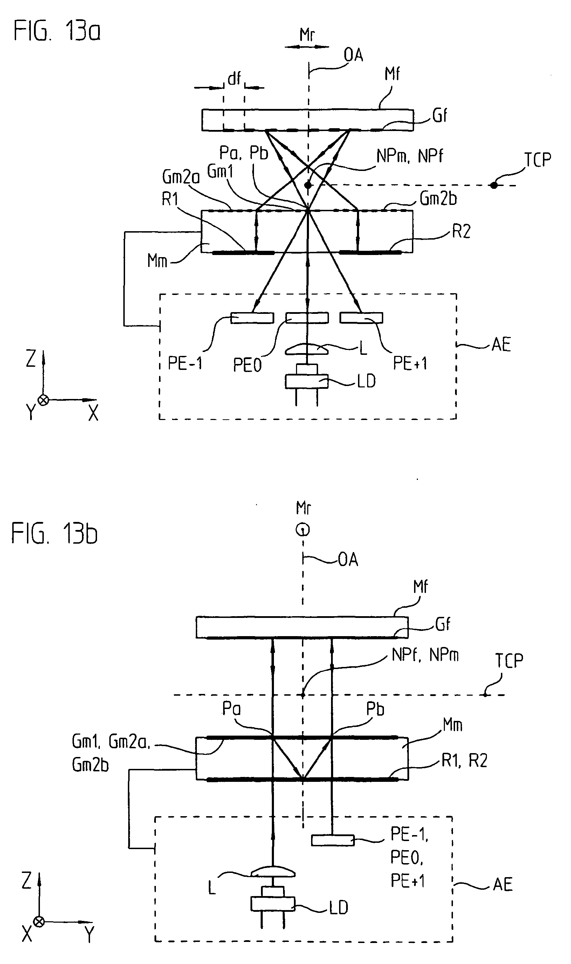

Fig. 13a    eine Frontansicht einer Abtastoptik eines fünften Ausführungsbei- spiels einer erfindungsgemäßen Positionsmesseinrichtung,

Fig. 13b    eine Queransicht der Abtastoptik des fünften Ausführungsbeispiels einer erfindungsgemäßen Positionsmesseinrichtung.

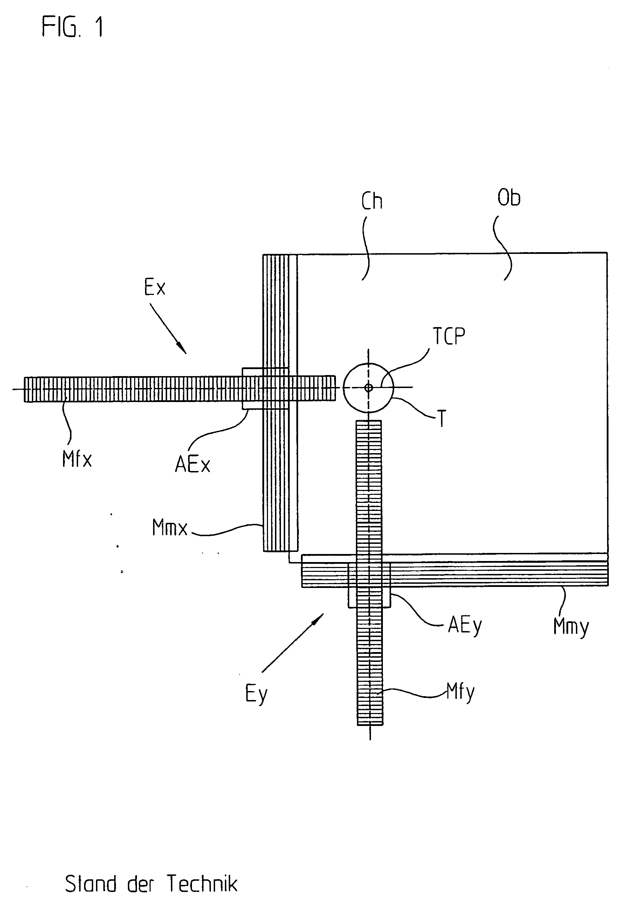

Figur 1 zeigt die bekannte Anordnung eines in X- und Y-Richtung bewegbaren XY-Tisches Ch mit zwei Positionsmesseinrichtungen bzw. Encodern Ex und Ey, gemäß dem Stand der Technik, wie dies z.B. aus der bereits erwähnten DE 25 21 618 schon bekannt ist. Das auf dem XY-Tisch Ch liegende Objekt Ob soll relativ zum Tool T mit seinem TCP positioniert werden. Die beiden Positionsmesseinrichtungen Ex und Ey bestimmen dazu die X-bzw. Y- Position des Tisches Ch in seiner Bewegungsebene XY. Der X-Encoder Ex bzw. die X-Positionsmesseinrichtung besteht aus einem ortsfesten Maßstab Mfx mit einer Teilung Gfx, ausgebildet als Längsteilung, und einem am XY-Tisch Ch befestigten und damit bewegten Maßstab Mm mit einer Teilung Mmx, ausgebildet als Querteilung, sowie einer Abtasteinheit AEx. Die Abtasteinheit AEx ist nur in X-Richtung verschiebbar und bewegt sich mit der X-Position des XY- Tisches Ch, d.h. zusammen mit der X-Position des bewegten Maßstab Mm. Dadurch kann die Abtasteinheit AEx beide Teilungen Mfx und Mmx im Kreuzungsbereich abtasten. Der Y-Encoder Ey bzw. die Y-Positionsmesseinrichtung umfasst analog die Komponenten Mfy, Mmy und AEy, wobei die Abtasteinheit AEy nur in Y-Richtung verschiebbar ist und sich mit der Y-Position des XY-Tisches Ch mitbewegt. Der Übersichtlichkeit halber sind in Figur 1 keine Antriebselemente wie Linear- oder Planarmotoren sowie Führungselemente dargestellt.

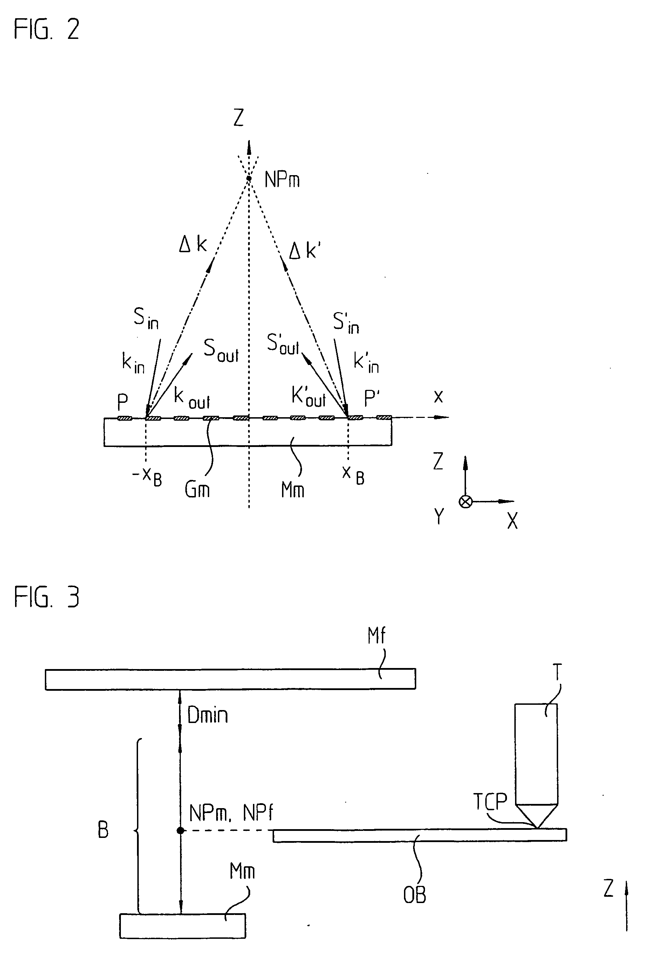

Nachfolgend seien erfindungsgemäß verbesserte Positionsmesseinrichtungen, insbesondere deren jeweilige Abtastoptiken, anhand der Figuren 2 - 13b erläutert. Hierbei wird Terminologie übereinstimmend mit der obigen Beschreibung des Standes der Technik verwendet.

Um die Abbe-Abstände in Z-Richtung eliminieren d.h. auf Null reduzieren zu können, benötigt man die genaue Kenntnis des effektiven Messpunktes einer Positionsmesseinrichtung. Dieser effektive Messpunkt muss dann zum TCP entlang der jeweiligen Messrichtung angeordnet werden.

Der effektive Messpunkt einer herkömmlichen Positionsmesseinrichtung, bestehend aus nur einem Maßstab mit einer Teilung bzw. einem Maßstabgitter und einer Abtasteinheit, wird üblicherweise als neutraler Drehpunkt NP der Positionsmesseinrichtung bezeichnet. Bei einer Kippung des Maßstabs oder der Abtasteinheit um den neutralen Drehpunkt NP tritt keine Phasenverschiebung auf, der angezeigte Positionswert bleibt in erster Ordnung konstant.

Beim erfindungsgemäßen Encoder-Konzept mit zwei gekreuzten Maßstäben Mf, Mm existieren zwei neutrale Drehpunkte NPm und NPf. Die angezeigte Position bleibt konstant, wenn der Maßstabs Mm um den Drehpunkt NPm und/oder der Maßstab Mf um den Drehpunkt NPf gekippt wird. Beide neutrale Drehpunkte NPm, NPf fallen in der Regel nicht zusammen. Erfindungsgemäß wird durch eine geeignete Abtastoptik sichergestellt, dass die Lage der neutralen Drehpunkte NPm, NPf der beiden Maßstäbe übereinstimmt.

Zunächst wird nunmehr die Kippung des beweglichen Maßstabs Mm betrachtet, da der neutrale Drehpunkt NPm den effektiven Messpunkt der Positionsmesseinrichtung darstellt. Um die Lage des neutralen Drehpunkts NPm bestimmen zu können, müssen die unterschiedlichen Phasenverschiebungen der beiden interferierenden Teilstrahlenbündel bei der Beugung und/oder gegebenenfalls Reflexion am gekippten Maßstab Mm betrachtet werden. In Figur 2 ist der Fall für zwei Teilstrahlenbündel dargestellt, die symmetrisch an der Teilung Gm, ausgebildet als Reflexionsteilung, auf dem Maßstab Mm gebeugt werden. Die Betrachtung gilt aber in analoger Weise auch für Durchlichtteilungen, d.h. Teilungen die durchstrahlt werden oder für nicht symmetrische Fälle. Die beiden einfallenden Teilstrahlenbündel $S_{in}$ und $S'_{in}$ mit den k-Vektoren $k_{in}$ und $k'_{in}$ werden in ausfallende Teilstrahlenbündel $S_{out}$ und $S'_{out}$ mit den k-Vektoren $k_{out}$ und $k'_{out}$ gebeugt. Die Phasenverschiebungen $\Delta\Phi$ bzw. $\Delta\Phi'$ der beiden Teilstrahlenbündel bei einer beliebigen, kleinen Bewegung des Maßstabs Mm sind gegeben durch

$$\Delta\Phi = (\vec{k}_{out} - \vec{k}_{in}) \cdot \Delta\vec{x}_P = \Delta\vec{k} \cdot \Delta\vec{x}_P \quad \text{bzw.} \quad \Delta\Phi' = (\vec{k}'_{out} - \vec{k}'_{in}) \cdot \Delta\vec{x}_{P'} = \Delta\vec{k}' \cdot \Delta\vec{x}_{P'}.$$

wobei $\Delta X_P$ und $\Delta X_{P'}$ die Bewegung des Maßstabs Mm an den Auftreffpunkten P bzw. P' wiedergeben. Bei Kippbewegungen des Maßstabs Mm sind $\Delta x_P$ und $\Delta x_{P'}$ unterschiedlich. Die an diesen Punkten eingezeichneten Vektoren $\Delta k$ bzw.

Δk' definieren jeweils Geraden, die sich in einem Punkt schneiden. Dieser Punkt stellt den neutralen Drehpunkt NPm der Positionsmesseinrichtung dar, denn eine Kippung des Maßstabs Mm um diesen Punkt bewegt die beiden Auftreffpunkte P und P' in erster Ordnung senkrecht zu den Vektoren Δk bzw. Δk', sodass nach obigen Formeln keine Phasenverschiebungen auftreten. Für Positionsmesseinrichtungen mit mehrmaligem Auftreffen der Teilstrahlenbündel auf den Maßstab Mm sind die einzelnen neutralen Drehpunkte NPm jeder Wechselwirkung wie Beugung, Reflexion und/oder Transmission arithmetisch zu mitteln, um den neutralen Drehpunkt NPm der Positionsmesseinrichtung zu erhalten.

Der neutrale Drehpunkt NPm der Positionsmesseinrichtung muss mit dem Objekt nivelliert, d.h. auf gleiche Z-Lage gebracht werden. Da in den meisten Fällen die Objektoberfläche mit dem Tool wechselwirkt, dient die Oberfläche auch als Bezugshöhe. Auf ihr liegt normalerweise der TCP. Nur mit der Nivellierung lässt sich erfindungsgemäß auch der Abbe-Abstand in Z-Richtung eliminieren. Die erforderliche Genauigkeit der Nivellierung kann leicht berechnet werden: Bei üblichen Führungsabweichungen von 20µrad und einer geforderten Positionierungsgenauigkeit des Tisches von 5nm ergibt sich ein maximaler Abbe-Abstand von 5nm / 20µrad = 250µm. Die Nivellierung muss demnach bei der Konstruktion sehr genau beachtet werden, sonst sind Positionierungsgenauigkeiten der Tische im Nanometerbereich nicht zu erreichen. Gemäß Figur 3 muss dazu der neutrale Drehpunkt NPm der Positionsmesseinrichtung in jedem Fall unterhalb des feststehenden Maßstabs Mf, der die Teilung Gf trägt, liegen, da das Objekt OB unter dem feststehenden Maßstab Mf bewegt werden soll. Ein Sicherheitsabstand Dmin ist einzuhalten, der in der Praxis vorzugsweise mindestens 0,5mm betragen sollte. Andererseits sollte der neutrale Drehpunkt NPm auch nicht unterhalb des bewegten Maßstabs Mm mit der Teilung Gm liegen. Sonst müsste der bewegte Maßstab Mm über das Objekt OB hinausragen. Bei den üblichen, sehr kleinen Abständen zwischen dem Tool T und dem Objekt OB müsste der Bewegungsbereich erheblich eingeschränkt werden, um eine Kollision zwischen Tool T und bewegtem Maßstab Mm zu verhindern. Die Abtastoptik sollte aus den gleichen Gründen aber auch keine Elemente wie z.B. Umlenkspiegel erfordern, die über den neutralen Drehpunkt NPm hinausragen. Optimal sind Z-Lagen des neutralen Drehpunkts NPm im Bereich B (siehe Figur 3) zwischen den beiden Maßstäben Mf und Mm. Dieser Bereich B wird begrenzt durch den Mindestabstand Dmin vom feststehenden Maßstab Mf und reicht bis zum bewegten Maßstab Mm.

Neben der Lage des neutralen Drehpunktes NPm ist auch die Lage des neutralen Drehpunktes NPf bzgl. des feststehenden Maßstabs Mf wichtig. Die Bestimmung des neutralen Drehpunktes NPf kann mit der gleichen, oben skizzierten Methode erfolgen. Die optimale Lage des neutralen Drehpunktes NPf kann gefunden werden, wenn man Störeinflüsse des Messzirkels betrachtet. Durch thermische oder zeitliche Drifteffekte oder wechselnde mechanische Kräfte kann sich der starr mit dem Tool T verbundene Maßstab Mf gegenüber dem Objekt OB und dem damit starr verbundenen Maßstab Mm bewegen. Während lineare Bewegungen von der Positionsmesseinrichtung erfasst werden, führen Kippbewegungen in der Regel zu Messfehlern. Nur wenn der Hebelarm für die Verschiebung des TCP, der als neutraler Drehpunkt des Tools betrachtet werden kann, und der Hebelarm für die Verschiebung der Position der Positionsmesseinrichtung gleich sind, können Messfehler vermieden werden. D.h. die Z-Lage des neutralen Drehpunktes NPf und des TCP müssen übereinstimmen. Folglich muss eine optimale Positionsmesseinrichtung identische neutrale Drehpunkte NPm und NPf aufweisen. Erfindungsgemäß wird demzufolge durch die Anordnung der Maßstäbe Mm, Mf relativ zum Tool Center Point TCP sichergestellt, dass die neutralen Drehpunkte NPm, NPf und der Tool Center Point TCP in einer Ebene liegen, die parallel zur Bewegungsebene XY liegt. Diese Bedingung gilt für alle drei Raumkomponenten X, Y und Z.

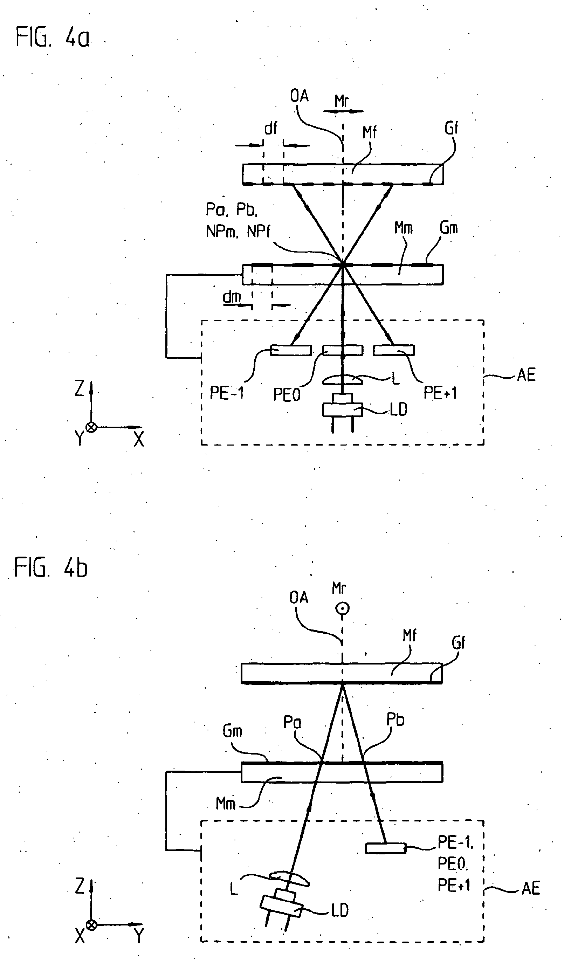

Nachfolgend werden anhand der der Figuren 4a - 13b verschiedene Ausführungen von Abtastoptiken erfindungsgemäßer Positionsmesseinrichtungen und entsprechende Maßstabanordnungen beschrieben, die die Einhaltung dieser Bedingung gewährleisten.

## Erste Ausführungsform einer Abtastoptik einer erfindungsgemäßen Positionsmesseinrichtung

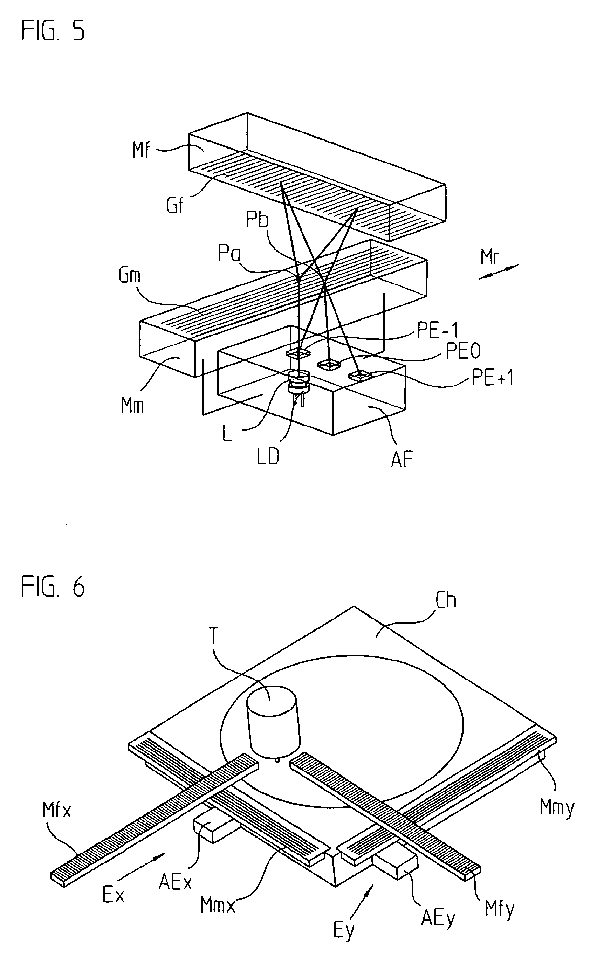

Die Figuren 4a, 4b und 5 zeigen eine erste Ausführungsform einer Abtastoptik einer erfindungsgemäßen Positionsmesseinrichtung mit zwei in Messrichtung Mr zueinander beweglichen Maßstäben Mm und Mf sowie einer Abtasteinheit AE. Eine entsprechende Positionsmesseinrichtung kann in einer Anordnung gemäß Figur 1 dann als X-Encoder als auch als Y-Encoder zum Einsatz kommen.

Bevor nachfolgend der Abtaststrahlengang der dargestellten Abtastoptik erläutert wird, sei zunächst darauf hingewiesen, dass zur Abtastoptik gemäß der Terminologie der vorliegenden Anmeldung all diejenigen Komponenten im Abtaststrahlengang gehören, über die eine Erzeugung verschiebungsabhängiger Ausgangssignale erfolgt, also neben den beiden Maßstäben Mm und Mf ferner noch die Abtasteinheit AE mit den darin angeordneten Komponenten, wie etwa eine Lichtquelle LD, eine Linse L sowie mehrere Photoelemente PE0, PE-1, PE+1.

Das Lichtbündel einer Lichtquelle LD in Form einer Laserdiode, vorzugsweise ein vertikal emittierender VCSEL (Vertical Cavity Surface Emitting Laser), wird über eine Kollimatorlinse L kollimiert und trifft in Strichrichtung der Teilung Gm geneigt auf den Maßstab Mm. Am Aufspaltort Pa spaltet die Teilung Gm, ausgebildet als Durchlichtteilung, das Lichtbündel in eine +1. und eine -1. Beugungsordnung auf. Beide Teilstrahlenbündel treffen anschließend auf den Maßstab Mf mit der Teilung Gf, ausgebildet als Reflexionsteilung. Durch Beugung in -1. bzw. +1 Beugungsordnung werden die beiden Teilstrahlenbündel in die Messrichtung Mr zurückgelenkt, während sie in Strichrichtung nur reflektiert werden. Die Teilungsperiode df der Teilung Gf beträgt nur die Hälfte der Teilungsperiode dm der Teilung Gm. Im weiteren Strahlengang gelangen beide Teilstrahlenbündel erneut auf den Maßstab Mm und werden durch erneute Beugung an der Teilung Gm am Vereinigungsort Pb überlagert und zur Interferenz gebracht. Die in -1., 0. und +1. resultierender Beugungsordnung austretenden Lichtbündel gelangen auf Photoelemente PE-1, PE0 und PE+1, die entsprechende Photoströme erzeugen. Im weiteren, nicht dargestellten Signalverlauf werden die Photoströme verstärkt und in bekannter Art und Weise einem Interpolator zugeführt, der daraus hoch aufgelöste Positionswerte ermittelt. Die erforderliche Phasenverschiebung zwischen den Photoströmen von vorzugsweise jeweils 120° wird in diesem Ausführungsbeispiel durch eine besondere Ausgestaltung der Teilung Gm erreicht. Diese ist gemäß der EP 163 362 B1 als Phasengitter mit einer Strichbreite von etwa 0.33 * dm und einer Phasenhöhe von etwa 120° ausgeführt. Die Teilung Gf ist vorzugsweise eine Phasenteilung mit einer Stegbreite von etwa dm/2 und einer Phasenhöhe von 180°.

Die neutralen Drehpunkte NPm und NPf dieser Abtastoptik liegen an derselben Stelle mittig zwischen dem Aufspaltort Pa und dem Vereinigungsort Pb (siehe Figuren 4a, 4b). Dies kann leicht anhand der oben beschriebenen Methode nachvollzogen werden. Diese Abtastoptik erfüllt damit die beschriebene, sehr wichtige Vorraussetzung für die optimale Ausgestaltung einer erfindungsgemäßen Positionsmesseinrichtung. Damit die neutralen Drehpunkte NPm und NPf gemäß Figur 3 im günstigen Bereich B liegen, muss in diesem Beispiel die bewegte Teilung Gm als Durchlichtteilung und die feststehende Teilung Gf als Reflexionsteilung gewählt werden. Die Abtastung erfolgt damit von der Seite der bewegten Teilung aus und nicht wie in der WO 2007/034379 A2 gezeigt von der Seite der feststehenden Teilung Gf. Die Abtasteinheit AE einerseits, die die Lichtquelle LD, die Linse L und die Photoelemente PE-1, PE0 und PE+1 beinhaltet und die feststehende Teilung Gf andererseits sind damit auf gegenüberliegenden Seiten der bewegten Teilung Gm angeordnet. Zur besseren Veranschaulichung ist die Gesamtanordnung in Figur 5 in einer räumlichen Ansicht dargestellt.

In Figur 6 ist ferner ein Gesamtsystem in einer räumlichen Ansicht gezeigt, bei dem ein X-Y-Tisch Ch zur Erfassung von dessen Bewegung in X- und Y-Richtung mit zwei Positionsmesseinrichtungen Ex, Ey gemäß dem vorher erläuterten Ausführungsbeispiel ausgestattet ist.

Die als Durchlichtteilung ausgebildete Teilung Gm ist im vorliegenden Ausführungsbeispiel vorzugsweise an der Seite des beweglichen Maßstabs Mm angebracht, die dem ortsfesten Maßstab Mf zugewandt ist. Die als Reflexionsteilung ausgebildete Teilung Mf kann auch als Rückflächenteilung ausgebildet sein, die dann auf der Seite des Maßstabs Mf aufgebracht ist, die zum Maßstab Mm abgewandt orientiert ist. Die Lage der neutralen Drehpunkte NPf und NPm wird dadurch nicht verändert.

Der Beleuchtungswinkel des aus der Linse L austretenden Strahlenbündels sollte vorteilhafterweise so klein wie möglich gewählt werden, damit bei einer Abstandsänderung zwischen Abtasteinheit AE und dem Maßstab Mf der Strahlbündelversatz begrenzt bleibt. Ein Wert von 20° sollte nicht überschritten werden. Der Abstand zwischen den beiden Maßstäben Mm und Mf liegt vorzugsweise im Bereich 1 - 30mm.

Alternative Varianten der Abtastoptik einer ersten Ausführungsform einer erfindungsgemäßen Positionsmesseinrichtung ergeben sich beispielsweise durch eine andere Art der Erzeugung phasenverschobener Signale, wie z.B. mit einer polarisationsoptischen Abtastung. Hierbei werden λ/2- oder λ/4-Platten zwischen den Maßstäben Mf und Mm eingebracht und darüber die beiden Teilstrahlenbündel orthogonal polarisiert. Auch können zur Vermeidung unerwünschter Verlustwärme optische Fasern zur Beleuchtungszuführung und zur optischen Signalrückführung verwendet werden. Statt Laserdioden können auch andere Lichtquellen wie z.B. LEDs eingesetzt werden.

Ferner sei erwähnt, dass es sich im Gegensatz zum eingangs diskutierten Stand der Technik als wesentlich günstiger erweist, die bewegten Komponenten der Abtastoptik auf der gegenüberliegenden Seite der als Längsteilung ausgebildeten Teilung Gf und damit unterhalb der als Querteilung ausgebildeten Teilung Gm anzuordnen.

Die erfindungsgemäße Ausgestaltung der Abtastoptik mit dem ortsfesten Maßstab Gf sowie dem relativ hierzu bewegten Maßstab Gm inklusive Abtasteinheit AE gewährleistet demzufolge, dass die Lage der beiden neutralen Drehpunkte NPf, NPm der beiden gekreuzten Maßstäbe Gf, Gm übereinstimmt.

Zweite Ausführungsform einer Abtastoptik einer erfindungsgemäßen Positionsmesseinrichtung

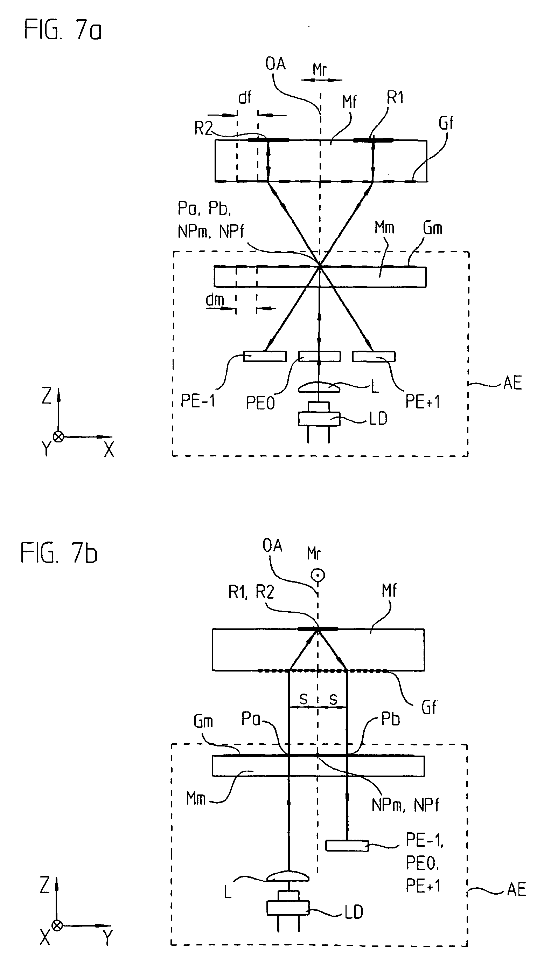

Die Figuren 7a und 7b zeigen eine Abtastoptik eines zweiten Ausführungsbeispiels einer erfindungsgemäßen Positionsmesseinrichtung in verschiedenen Ansichten. Das Lichtbündel einer Laserdiode LD wird wiederum durch eine Kollimatorlinse L kollimiert und parallel zur optischen Achse OA senkrecht auf den Maßstab Mm gelenkt. An seiner Oberseite spaltet eine als Durchlichtteilung ausgebildete Teilung Gm am Aufspaltort Pa das Lichtbündel in eine -1. und eine +1. Beugungsordnung. Beide Teilstrahlenbündel gelangen auf den Maßstab Mf, der an seiner Unterseite eine als besondere Durchlichtteilung ausgebildete Teilung Gf trägt. Diese Teilung Gf lenkt die Teilstrahlenbündel in Messrichtung Mr gesehen parallel zur optischen Achse OA. Quer dazu fokussiert die Teilung Gf die Teilstrahlenbündel und lenkt sie ab, so dass sie fokussiert auf die Reflektoren R1 bzw. R2 auf der Rückseite des Maßstabs Mf treffen. Nach der Reflexion gelangen sie wiederum auf die Teilung Gf. Dort werden sie in Messrichtung Mr wieder abgelenkt, wobei die Ablenkung symmetrisch zu den eintreffenden Strahlenbündeln erfolgt. Quer zur Messrichtung Mr kollimiert die Teilung Gf die Teilstrahlenbündel wieder und lenkt sie parallel zur optischen Achse OA. Die austretenden Teilstrahlenbündel gelangen zurück zur Teilung Gm, wo sie am Vereinigungsort Pb durch Beugung in +1. bzw. -1. Beugungsordnung überlagert und zur Interferenz gebracht werden. Die Teilungsstruktur der Teilung Gm wird wie im ersten Ausführungsbeispiel so gewählt, dass die in -1., 0., und +1. resultierender Beugungsordnung austretenden Lichtbündel jeweils um 120° phasenversetzt in ihrer Intensität moduliert sind und durch Photoelemente PE-1, PE0 und PE+1 erfasst werden.

Wie im vorherigen Ausführungsbeispiel ist der Maßstab Mm am XY-Tisch befestigt und mit diesem in X- und Y-Richtung verschiebbar, während die schematisiert angedeutete Abtasteinheit AE nur in der Messrichtung Mr mit dem XY-Tisch mitbewegt wird und quer dazu durch - nicht dargestellte - Linearführungen fixiert bleibt. Der Maßstab Mf ist ortsfest angeordnet.

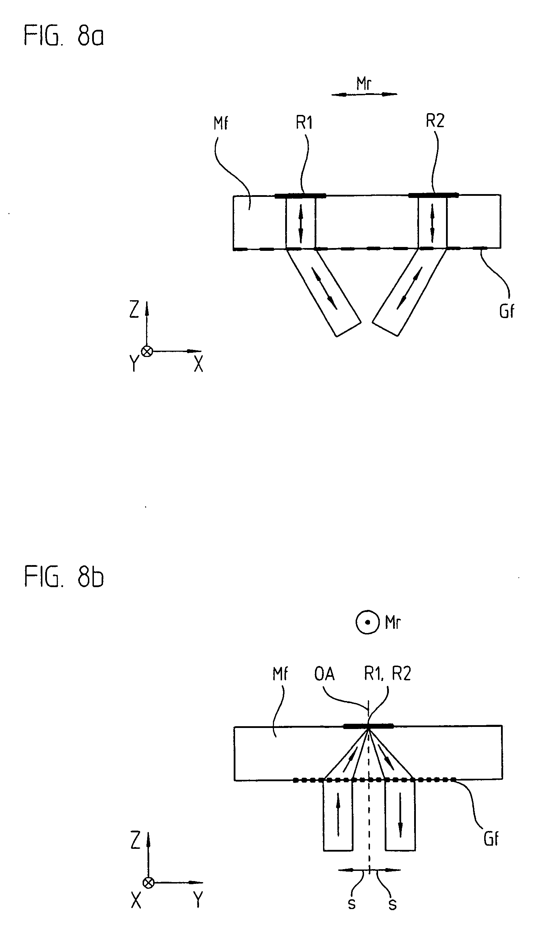

Die Besonderheit dieses Ausführungsbeispiels liegt in der Ausgestaltung der Teilung Gf. Sie wird im Folgenden auch als Retroreflektorteilung bezeichnet. In den Figuren 8a und 8b ist zur Veranschaulichung der Strahlenverlauf im Abtaststrahlengang im Bereich des Maßstabs Mf im Detail dargestellt. Die Teilung Gf bzw. die Retroreflektorteilung implementiert in Form einer diffraktiven Struktur gleichzeitig zwei Funktionen.

Zum einen lenkt sie die einfallenden Teilstrahlenbündel in bzw. entgegen der Messrichtung Mr ab. Diese Ablenkwirkung entspricht der optischen Wirkung einer periodischen Teilung mit einer Teilungsperiode df. Da die als Durchlichtteilung ausgebildete Teilung Gf zweimal durchlaufen wird, muss für dieses Ausführungsbeispiel df gleich der Teilungsperiode dm der Teilung Gm sein.

Zum anderen stellt die Teilung Gf eine diffraktive Zylinderlinse dar. Diese Zylinderlinse fokussiert die Teilstrahlenbündel quer zur Messrichtung Mr auf die Reflektoren R1 bzw. R2, wie dies aus Figur 8b ersichtlich ist. Die gleichzeitige Ablenkung quer zur Messrichtung Mr kommt durch den Versatz S der einfallenden Teilstrahlenbündel zum Zentrum Z der Zylinderlinse zustande. Die Reflektoren R1 und R2 können sowohl als metallische als auch als Interferenzspiegel ausgebildet sein.

Die Zylinderlinse, die im Strahlenverlauf zweimal durchlaufen wird, stellt zusammen mit den Reflektoren R1 bzw. R2 einen Retroreflektor dar, der quer und nur quer zur Messrichtung Mr die einfallende Strahlrichtung umkehrt. Dieser Retroreflektor besitzt die gleiche optische Wirkung wie ein Dachkantprisma mit einem 90° Prismenwinkel. Die Retroreflexion ermöglicht es, wesentlich größere Verdrehungen der Maßstäbe Mm, Mf um die optische Achse OA zu kompensieren. Bei einer solchen, als Moiré-Verdrehung bezeichneten Verkippung der Maßstäbe Mm, Mf treten entgegengesetzte Strahlneigungen der beiden Teilstrahlenbündel quer zur Messrichtung Mr auf. Ohne Retroreflektor bewirkt die Moiré-Verkippung einen Signaleinbruch, der insbesondere bei Positionsmesseinrichtungen mit kleiner Signalperiode sehr groß ist. Äußerst kleine zulässige Toleranzen in Bezug auf die Moire-Verkippung sind die Folge. Durch den Retroreflektor werden die Strahlneigungen quer zur Messrichtung Mr kompensiert, so dass wesentlich größere Moiré-Toleranzen selbst bei Positionsmesseinrichtungen mit sehr kleiner Signalperiode erlaubt sind. Weitere Ausführungen dazu sind in der DE 10 2005 029 917 A1 sowie in der DE 10 2006 042 743.2 zu finden.

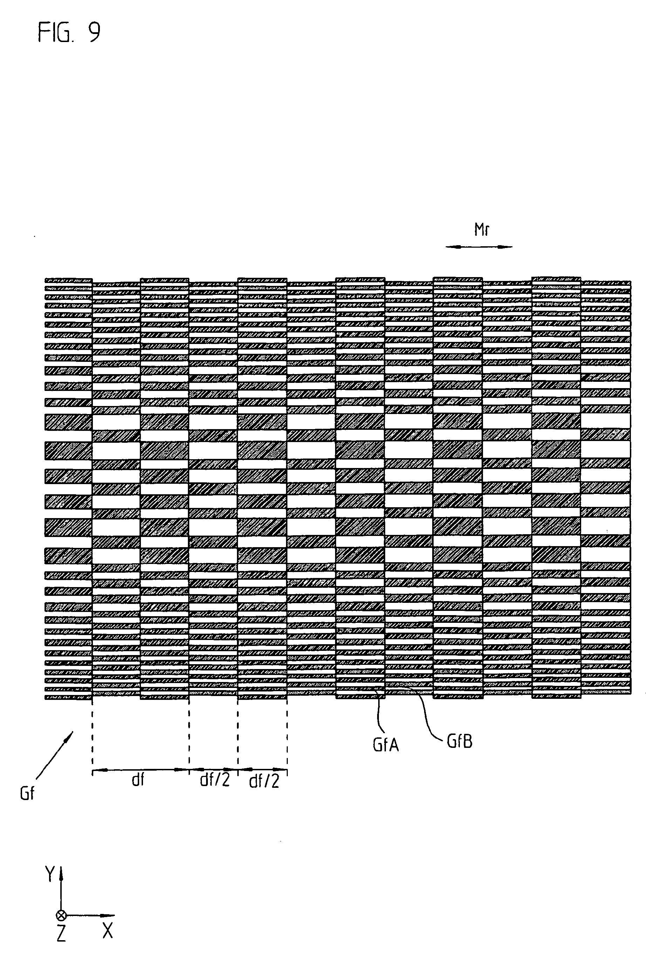

Im Unterschied zu den bekannten (Abtast-)Teilungen aus der DE 10 2005 029 917 A1 muss die Retroreflektorteilung, d.h. die Teilung Gf im vorliegenden Fall die einfallenden Teilstrahlenbündel sowohl in als auch entgegen der Messrichtung Mr ablenken und muss damit die aufspaltende Wirkung einer normalen Teilung besitzen. Dies hat zur Folge, dass die nötige Teilung Gf anders dimensioniert werden muss. Figur 9 zeigt Details der Struktur der Teilung Gf bzw. Retroreflektorteilung. Sie besteht aus einzelnen Streifen GfA und GfB mit einer Breite von je df/2, die periodisch in Messrichtung Mr angeordnet sind. Die beiden Streifen GfA und GfB sind zueinander komplementär, d.h. die Strukturen können ineinander übergeführt werden, indem die beiden Zustände der binären Struktur an jeder Stelle vertauscht werden.

Jeder Streifen GfA oder GfB stellt eine diffraktive Zylinderlinse dar. Sie wird unter Zuhilfenahme folgender Phasenfunktion Φ(y) berechnet:

$$\varphi(y) = [\frac{2\pi}{\lambda} \cdot n \cdot \sqrt{Df^2 + y^2}] \bmod 2\pi$$

mit:

y      := Querposition
Df     := Dicke des Maßstabs Mf
n      := Brechungsindex des Maßstabs Mf
λ      := Wellenlänge der verwendeten Lichtquelle.

Im Streifen GfA liegt der erste Zustand an jeder Stelle mit $|\varphi(y)| \leq \pi/2$ vor, im Streifen GfB liegt dort der komplementäre zweite Zustand. Die binäre Struktur wird vorzugsweise als Phasenteilung mit einer Phasenhöhe von 180° ausgebildet. Da im Randbereich die lokalen Teilungsperioden bereits im Bereich der Wellenlänge λ liegt, können mit Hilfe numerischer Optimierungen Phasenhöhen und Strukturbreiten bzw. -formen lokal so angepasst werden, dass eine maximale Beugungseffizienz der genutzten Beugungsordnungen erreicht wird. Diese Optimierung liefert in der Regel verrundete Strukturelemente statt der dargestellten Rechtecke gemäß Figur 9. Besonders vorteilhaft - wenngleich aufwendig - ist es, die streifenförmigen Zylinderlinsen als geblazte Strukturen auszubilden.

Die Teilung Gf bzw. Retroreflektorteilung erzeugt, wie in Figur 7b dargestellt ist, einen Strahlversatz 2*S quer zur Messrichtung Mr. Dies erlaubt eine Beleuchtungsrichtung der kollimierten Lichtquelle senkrecht zu den Maßstäben Mm und Mf und zugleich eine, in y-Richtung daneben angeordnete Detektion mittels der Photoelemente PE-1, PE0 und PE+1. Eine schräge Beleuchtungsrichtung wie im ersten Ausführungsbeispiel ist hier nicht mehr erforderlich. Durch diese hohe Symmetrie werden besonders große Lagetoleranzen in Bezug auf die beiden Maßstäbe Mm, Mf und die Abtasteinheit AE erreicht. Insbesondere für den Abstand zwischen den Maßstäben Mm und Mf gibt es keine in der Praxis relevante Toleranzbeschränkung mehr.

Dritte Ausführungsform einer Abtastoptik einer erfindungsgemäßen Positionsmesseinrichtung

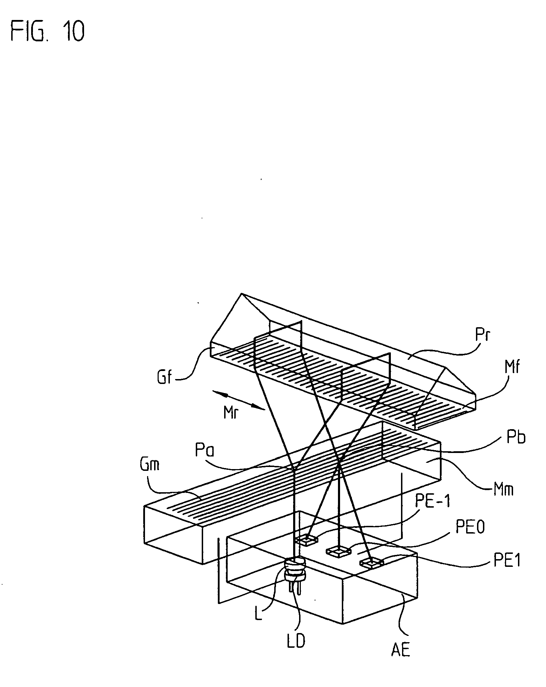

Figur 10 zeigt die Abtastoptik eines drittes Ausführungsbeispiels einer erfindungsgemäßen Positionsmesseinrichtung in einer räumlichen Ansicht, bei der ein Prisma Pr auf der Rückseite des Maßstabs Mf angeordnet ist und das Prisma Pr als 90°-Dachkantprisma ausgebildet ist. Hier werden die beiden Funktionen der diffraktiven Retroreflektorteilung bzw. der Teilung Gf der zweiten Ausführungsform auf die beiden Bestandteile des Maßstabs Mf aufgeteilt, d.h. auf die Teilung Gf und das Prisma Pr. Die Teilung Gf weist hierbei dieselbe Teilungsperiode wie die Teilung Gm auf dem Maßstab Mm auf. Dadurch werden die eintretenden Teilstrahlenbündel in Messrichtung Mr entlang der optischen Achse gelenkt. Das 90°-Dachkantprisma führt dann die Retroreflexion quer zur Messrichtung Mr durch. Der erneute Durchtritt der Teilstrahlenbündel durch die Teilung Gf in Messrichtung Mr richtet die beiden Teilstrahlenbündel in Messrichtung Mr auf einen gemeinsamen Vereinigungsort Pb auf der Teilung Gm, wo entsprechend dieses Ausführungsbeispiels die Interferenz beider Teilstrahlenbündel erfolgt.

Die beiden Elemente des Maßstabs Gf, d.h. das Prisma Pr und die Teilung Gf, sind in diesem Beispiel fest miteinander verbunden. Vorteilhafterweise werden sie monolithisch hergestellt. Alternativ können sie getrennt gefertigt werden und anschließend z.B. durch Ansprengen verbunden werden. Auch ein getrennter Anbau, der die beiden Elemente fest verbindet, ist möglich. In einer sehr kostengünstigen Variante werden statt dem 90°-Dachkantprisma zwei schmale Spiegelstreifen im 90°-Winkel zueinander fixiert und als Retroreflektor verwendet.

Bzgl. der weiteren Funktion sei auf das vorher erläuterte zweite Ausführungsbeispiel verwiesen.

Der besondere Vorteil der dritten Ausführungsform liegt in der hohen erzielbaren Signalstärke, da weniger verlustbehaftete, diffraktive Bauelemente eingesetzt werden. Die Interpolationsqualität der nachfolgenden Interpolationselektronik kann dadurch verbessert werden.

Generell können sowohl die Retroreflektorteilung als auch die Teilung mit dem aufgesetzten Dachkantprisma mit sehr vielen Abtastprinzipien kombiniert werden. So ist es einfach möglich Abtastoptiken mit einer Moiré-Kompensation auszustatten und evtl. auch als Wahlalternative für den jeweiligen Kunden anzubieten.

In den bislang erläuterten Ausführungsformen weisen die Maßstäbe Mm und Mf durchgehende Teilungsfelder auf. Zusätzliche Einschränkungen der Lagetoleranzen der Maßstäbe Mm, Mf und der Abtasteinheit AE zueinander die bei mehreren Ausführungsformen in der WO 2007/034379 A2 nötig sind, um die einzelnen Strahlenbündel durch die zugehörigen, voneinander abgegrenzten Teilungsfelder zu leiten, sind in den erfindungsgemäßen Ausführungsformen nicht erforderlich.

Vierte Ausführungsform einer Abtastoptik einer erfindungsgemäßen Positionsmesseinrichtung

Die Figuren 11a und 11b zeigen die Abtastoptik eines vierten Ausführungsbeispiels einer erfindungsgemäßen Positionsmesseinrichtung, analog zu den Darstellungen des zweiten Ausführungsbeispiels in den Figuren 7a und 7b. In den Figuren 12a und 12b ist ebenfalls analog zum zweiten Ausführungsbeispiel der Strahlenverlauf im Abtaststrahlengang im Bereich des raumfesten Maßstabs Mf dargestellt.

Das Lichtbündel der Laserdiode LD wird wiederum durch eine Kollimatorlinse L kollimiert und parallel zur optischen Achse OA senkrecht auf den beweglichen Maßstab Mm gelenkt. An dessen Oberseite spaltet die wiederum die als Durchlichtteilung ausgebildete Teilung Gm am Aufspaltort Pa das einfallende Lichtbündel in Teilstrahlenbündel in einer -1. und einer +1. Beugungsordnung auf.

Die zwei aufgespaltenen Teilstrahlenbündel gelangen auf den beweglichen Maßstab Mf, der an seiner Unterseite bzw. der dem beweglichen Maßstab Mm zugewandten Seite, eine Reflexionsschicht R in einem zentralen Bereich trägt; die Reflexionsschicht R besitzt eine reflektierende Wirkung in Richtung der zum beweglichen Maßstab Mm abgewandten Seite. Seitlich benachbart zur Reflexionsschicht R werden die aufgespaltenen Teilstrahlenbündel an der Unterseite des raumfesten Maßstabs Mf zur optischen Achse OA hin gebrochen und gelangen auf die nunmehr als Reflexionsteilung ausgebildete Teilung Gf an der Oberseite des raumfesten Maßstabs Mf. Die Reflexionsteilung Gf ist als Reflexionsphasengitter ausgebildet und besitzt hinsichtlich seiner Beugungswirkung die gleichen optischen Eigenschaften wie die als Durchlichtteilung ausgebildete Teilung Gf im zweiten Ausführungsbeispiel der Figuren 7a, 7, 8a und 8b. Dies bedeutet, dass die auf die Teilung Gf einfallenden Teilstrahlenbündel in Messrichtung Mr gesehen zur optischen Achse OA hin parallel gerichtet werden und quer zur Messrichtung Mr die Teilstrahlenbündel auf die Reflexionsschicht R hin fokussiert werden. Die optische Wirkung entspricht damit also wiederum in Überlagerung in Messrichtung Mr einem Aufspaltgitter und quer zur Messrichtung Mr einer diffraktiven Zylinderlinse. Die Brennweite der diffraktiven Zylinderlinse ist so gewählt, dass der Fokus in der Ebene der Reflexionsschicht R auf derselben zu liegen kommt.

Anschließend erfolgt eine Reflexion der Teilstrahlenbündel an der Reflexionsschicht R zurück in Richtung der Teilung Gf, wo die Teilstrahlenbündel erneut kollimiert und gleichzeitig in Messrichtung Mr abgelenkt werden. Aufgrund des Versatzes s zwischen dem einfallenden Teilstrahlenbündel und der optischen Achse OA der Zylinderlinse resultiert ein Strahlversatz 2s zwischen dem in den raumfesten Maßstab Mf einfallenden und dem daraus ausfallenden Teilstrahlenbündel quer zur Messrichtung Mr, d.h. in y-Richtung. Die Teilstrahlenbündel erfahren beim Verlassen des raumfesten Maßstabs Mf wieder eine Brechung und treffen alle am Vereinigungsort Pb auf die Teilung Gm des beweglichen Maßstabs Mm, wo sie analog zum zweiten Ausführungsbeispiel durch Beugung in +1. bzw. -1. Beugungsordnung überlagert und zur Interferenz gebracht werden. Die Teilungsstruktur der Teilung Gm wird wie im zweiten Ausführungsbeispiel so gewählt, dass die in -1., 0., und +1. resultierender Beugungsordnung daraus austretenden Lichtbündel im Fall der Relativbewegung der zueinander verschiebbaren Komponenten jeweils um 120° phasenversetzt in ihrer Intensität moduliert sind und durch Photoelemente PE-1, PE0 und PE+1 erfasst werden.

Wie im zweiten Ausführungsbeispiel ist der Maßstab Mm am XY-Tisch befestigt und mit diesem in X- und Y-Richtung verschiebbar, während die schematisiert angedeutete Abtasteinheit AE nur in der Messrichtung Mr mit dem XY-Tisch mitbewegt wird und quer dazu durch Linearführungen fixiert bleibt. Der Maßstab Mf ist wiederum ortsfest angeordnet.

Die Besonderheit dieses Ausführungsbeispiels liegt in der Ausgestaltung des ortsfesten Maßstabs Mf, welcher als sog. Rückflächenmaßstab ausgebildet ist mit einer als Reflexionsphasengitter ausgebildeten Teilung Gf. In Bezug auf deren konkrete optische Eigenschaften sei auf die Ausführungen zum zweiten Ausführungsbeispiel verwiesen, die nunmehr auf die Reflexionsphasenteilung zu übertragen sind.

Besonders vorteilhaft an diesem Beispiel ist, dass der ortsfeste Maßstab Mf eine verschmutzungssichere Rückflächen-Reflexionsteilung aufweist. Eine Verschmutzung kann nicht in die Furchen der Phasenteilung eindringen, da die Teilung durch eine flächige Reflexionsschicht, z.B. eine Metallschicht, geschützt ist. Die gegenüberliegende Seite des ortsfesten Maßstabs Mf weist nur ebene Flächen auf, die bei einer Verschmutzung leicht gereinigt werden können.

Fünfte Ausführungsform einer Abtastoptik einer erfindungsgemäßen Positionsmesseinrichtung

Die Figuren 13a und 13b zeigen die Abtastoptik eines fünften Ausführungsbeispiels einer erfindungsgemäßen Positionsmesseinrichtung, analog zu Darstellungen vorhergehender Ausführungsbeispiele.

Das kollimierte Lichtbündel der Laserdiode LD trifft parallel zur optischen Achse OA auf den beweglichen Maßstab Mm. Eine erste Durchlichtteilung Gm1 mit einer Teilungsperiode dm an seiner Oberfläche spaltet das am Aufspaltort Pa auftreffende Lichtbündel in eine -1. und eine +1. Beugungsordnung auf. Die beiden aufgespaltenen Teilstrahlenbündel gelangen auf die Reflexionsteilung Gf des raumfesten Maßstabs Mf und werden dort zurückgebeugt. Durch die sehr kleine Teilungsperiode df < dm/2 gelangen die Teilstrahlenbündel in Messrichtung x versetzt zum Aufspaltort Pa wieder auf den beweglichen Maßstab Mm. Sie werden dort von den zweiten Durchlichtteilungen Gm2a bzw. Gm2b gebeugt, die beidseitig neben der ersten Durchlichtteilung Gm1 angeordnet ist. Die zweiten Durchlichtteilungen Gm2a, Gm2b sind ähnlich ausgeführt wie die Teilungen Gm des zweiten Ausführungsbeispiels gemäß den Figuren 7a, 7, 8a und 8b. Sie lenken daher die Teilstrahlenbündel in Messrichtung x parallel zur optischen Achse OA und fokussieren senkrecht zur Messrichtung x auf Reflektoren R1 bzw. R2 auf der Unterseite des beweglichen Maßstabs Mm. Nach der Reflexion an R1 bzw. R2 gelangen die Teilstrahlenbündel erneut auf die Teilung Gm2a bzw. Gm2b, werden dort in Messrichtung x wieder zurückgelenkt und quer zur Messrichtung x wieder kollimiert. Nach einer weiteren Beugung am Gitter Gf des raumfesten Maßstabs Mf werden die Teilstrahlenbündel am Vereinigungsort Pb durch die Teilung Gm1 wieder überlagert und zur Interferenz gebracht. Schließlich detektieren ähnlich wie in den obigen Ausführungsbeispielen die Photoelemente PE-1, PE0 und PE+1 die in verschiedenen Richtungen austretenden Strahlenbündel.

Die räumliche Lage der neutralen Drehpunkte NPm und NPf kann mit der oben beschriebenen Methode leicht bestimmt werden. Durch die starke Ablenkwirkung der raumfesten Teilung Gf liegen diese neutrale Drehpunkte zwischen den Maßstäben Mm und Mf. Je kleiner die Teilungsperiode df relativ zur Teilungsperiode dm gewählt wird desto höher liegen die neutralen Drehpunkte NPf und NPm in Z-Richtung. Sie können daher den Notwendigkeiten der Applikation geeignet angepasst werden. Der besondere Vorteil liegt in jedem Falle darin, dass der bewegliche Maßstab Mm damit tiefer am Tisch befestigt werden kann und seine Oberseite nicht mehr mit dem TCP fluchten muss. Daher kann er leicht vor Kollisionen mit dem Tool geschützt werden. Außerdem lässt sich das Messobjekt (z.B. ein Wafer) leichter vom Tisch abnehmen, da der bewegliche Maßstab Mm nicht mehr über die Oberkante des Tisches um die Dicke des Messobjekts (Wafer) herausragen muss.

Neben den erläuterten Beispielen gibt es natürlich noch eine Vielzahl weiterer Ausführungsformen im Rahmen der durch die Patentansprüche genau definierten vorliegenden Erfindung.

**Patentansprüche**

1. Positionsmesseinrichtung zum Messen der Relativlage eines Objekts relativ zu einem Tool (T), welches einen Tool Center Point (TCP) besitzt, bestehend aus mindestens zwei gekreuzt angeordneten und zueinander in mindestens einer Bewegungsebene (XY) verschiebbaren Maßstäben (Mm, Mf; Mmx, Mfx; Mmy, Mfy) und einer zugeordneten optischen Abtasteinheit (AE; AEx, Aey; AE1, AE2, AE3), die Positionssignale für mindestens eine Messrichtung (Mr) parallel zur Bewegungsebene erzeugt und jeder Maßstab (Mm, Mf; Mmx, Mfx; Mmy, Mfy) einen neutralen Drehpunkt (NPm, NPf) aufweist, um den eine Verkippung des jeweiligen Maßstabs (Mm, Mf; Mmx, Mfx; Mmy, Mfy) keine Veränderung der erfassten Position bewirkt und wobei

   - durch die Abtastoptik sichergestellt ist, dass die Lage der neutralen Drehpunkte (NPm, NPf) der beiden Maßstäbe (Mm, Mf; Mmx, Mfx; Mmy, Mfy) übereinstimmt und
   - durch die Anordnung der Maßstäbe (Mm, Mf, Mmx, Mfx, Mmy, Mfy) relativ zum Tool Center Point (TCP) sichergestellt ist, dass die neutralen Drehpunkte (NPm, NPf) der beiden Maßstäbe (Mm, Mf; Mmx, Mfx; Mmy, Mfy) und der Tool Center Point (TCP) in einer Ebene liegen, die parallel zur Bewegungsebene (XY) liegt.

2. Positionsmesseinrichtung nach Anspruch 1, wobei die Abtastoptik folgende Komponenten umfasst:

   - einen raumfest angeordneten Maßstab (Mf) mit einer Teilung (Gf),
   - ein gegenüber dem raumfest angeordneten Maßstab (Mm) beweglich und gekreuzt angeordneter Maßstab (Mm) mit einer Teilung (Gm) sowie
   - eine Abtasteinheit (AE; AEx, Aey; AE1, AE2, AE3), wobei der bewegliche Maßstab (Mm) unterhalb des raumfesten Maßstabs (Mf) angeordnet ist und unterhalb des beweglichen Maßstabs (Mm) die Abtasteinheit (AE; AEx, Aey; AE1, AE2, AE3) angeordnet ist, so dass die neutralen Drehpunkte (NPm, NPf) der beiden Maßstäbe (Mm, Mf; Mmx, Mfx; Mmy, Mfy) in einem Bereich (B) zwischen den beiden Maßstäben (Mm, Mf; Mmx, Mfx; Mmy, Mfy) oder auf dem beweglichen Maßstab (Mm, Mmx, Mmy) liegen.

3. Positionsmesseinrichtung nach mindestens einem der vorhergehenden Ansprüche, wobei die Lageabweichungen der neutralen Drehpunkte (NPm, NPf) vom Tool Center Point (TCP) senkrecht zur Bewegungsebene (XY) kleiner als 1 mm sind.

4. Positionsmesseinrichtung nach einem mindestens einem der vorhergehenden Ansprüche, wobei die Teilung (Gm) des beweglichen Maßstabs (Mm) auf derjenigen Maßstabseite angebracht ist, die dem raumfesten Maßstab (Mf) zugewandt ist.

5. Positionsmesseinrichtung nach Anspruch 4, wobei die Teilung (Gm) des beweglichen Maßstabs (Mm) und der Tool Center Point (TCP) in einer Ebene angeordnet sind, die parallel zur Bewegungsebene (XY) liegt.

6. Positionsmesseinrichtung nach mindestens einem der vorhergehenden Ansprüche, wobei die Teilung (Gm) des beweglichen Maßstabs (Mm) als Durchlichtteilung ausgebildet ist.

7. Positionsmesseinrichtung nach mindestens einem der vorhergehenden Ansprüche, wobei die Abtasteinheit (AE; AEx, Aey; AE1, AE2, AE3) eine Lichtquelle (LD) sowie zumindest ein Photoelement (PE-1, PE0, PE+1) umfasst, die dergestalt angeordnet sind, dass

   - das von der Lichtquelle (LD) emittierte Lichtbündel an einem Auftreffort (Pa) auf die Teilung (Gm) des beweglichen Maßstabs (Mm) trifft, wo eine Aufspaltung in mehrere Teilstrahlenbündel erfolgt,
   - die aufgespaltenen Teilstrahlenbündel dann auf die Teilung (Gf) des raumfesten Maßstabs (Mf) auftreffen, wo eine Rückreflexion in Richtung des beweglichen Maßstabs (Mm) erfolgt, wo die zurückreflektierten Teilstrahlenbündel an einem Vereinigungsort (Pb) auf der Teilung (Gm) des beweglichen Maßstabs (Mm) überlagert und zur Interferenz gebracht werden,

- vom Vereinigungsort (Pb) auf der Teilung (Gm) des beweglichen Maßstabs (Mm) in zumindest einer Raumrichtung Lichtbündel austreten, die auf das zumindest eine Photoelement (PE-1, PE0, PE+1) in der Abtasteinheit (AE; AEx, Aey; AE1, AE2, AE3) gelangen, wo verschiebungsabhängig modulierte Photoströme resultieren.

8. Positionsmesseinrichtung nach Anspruch 7, wobei die Abtasteinheit (AE; AEx, Aey; AE1, AE2, AE3) mehrere Photoelemente (PE-1, PE0, PE+1) umfasst und am Vereinigungsort (Pb) auf der Teilung (Gm) des beweglichen Maßstabs (Mm) mehrere Lichtbündel in unterschiedlichen Raumrichtungen austreten, die auf die mehreren Photoelemente (PE-1, PE0, PE+1) gelangen, wo mehrere verschiebungsabhängig modulierte, phasenverschobene Photoströme resultieren.

9. Positionsmesseinrichtung nach Anspruch 8, wobei die Teilung (Gm) des beweglichen Maßstabs (Mm) als Phasengitter mit einer Strichbreite von 1/3 * dm und einer Phasenhöhe von 120° ausgebildet ist, wobei dm die Teilungsperiode der Teilung (Gm) des beweglichen Maßstabs (Mm) angibt, so dass an den Photoelementen (PE-1, PE0, PE+1) phasenverschobene Photoströme mit einer Phasenverschiebung von 120° resultieren.

10. Positionsmesseinrichtung nach Anspruch 7, wobei die Teilung (Gf) des raumfesten Maßstabs (Mf) als Reflexionsteilung ausgebildet ist.

11. Positionsmesseinrichtung nach Anspruch 10, wobei der Beleuchtungswinkel des aus der Lichtquelle (LD) austretenden Lichtbündels kleiner als 20° ist.

12. Positionsmesseinrichtung nach Anspruch 7, wobei der raumfeste Maßstab (Mf) sowohl eine Teilung (Gf) als auch zumindest ein Reflektorelement (R, R1, R2) aufweist und dergestalt angeordnet sind, dass

- die aufgespaltenen Teilstrahlenbündel auf die Teilung (Gf) des raumfesten Maßstabs (Mf) treffen, die die Teilstrahlenbündel in Messrichtung (Mr) ablenkt und quer zur Messrichtung (Mr) fokussiert,
- nachfolgend die Teilstrahlenbündel durch das zumindest eine Reflektorelement (R, R1, R2) reflektiert werden
- und wiederum auf die Teilung (Gf) des raumfesten Maßstabs (Mf) gelangen, die die Teilstrahlenbündel in Messrichtung (Mr) erneut ablenkt und quer zur Messrichtung (Mr) wieder kollimiert, so dass sie in Richtung des beweglichen Maßstabs (Mm) zurückreflektiert werden.

13. Positionsmesseinrichtung nach Anspruch 12, wobei die Teilung (Gf) des raumfesten Maßstabs (Mf) als diffraktive Struktur ausgebildet ist, die eine Überlagerung eines in Messrichtung (Mr) ablenkenden Gitters und einer quer zur Messrichtung (Mr) fokussierenden, diffraktiven Zylinderlinse darstellt.

14. Positionsmesseinrichtung nach Anspruch 7, wobei der raumfeste Maßstab (Mf) sowohl eine Teilung (Gf) als auch ein Prisma (Pr) umfasst und die auf den raumfesten Maßstab (Mf) einfallenden Teilstrahlenbündel zunächst auf die Teilung (Gf) des raumfesten Maßstabs (Mf) treffen, die die Teilstrahlenbündel in Messrichtung (Mr) ablenkt, nachfolgend die Teilstrahlenbündel durch das Prisma (Pr) reflektiert werden und wiederum auf die Teilung (Gf) des raumfesten Maßstabs (Mf) gelangen, die die Teilstrahlenbündel in Messrichtung (Mr) erneut ablenkt, so dass sie in Richtung des beweglichen Maßstabs (Mm) zurückreflektiert werden.

15. Positionsmesseinrichtung nach Anspruch 14, wobei das Prisma (Pr) als 90°-Dachkantprisma ausgebildet ist.

16. Positionsmesseinrichtung nach Anspruch 10 und 12, wobei die Teilung (Gf) des raumfesten Maßstabs (Mf) als Rückflächen-Reflexionsteilung ausgebildet ist.

17. Positionsmesseinrichtung nach mindestens einem der Ansprüche 1 - 4, wobei die Abtasteinheit (AE) eine Lichtquelle (LD) sowie zumindest ein Photoelement (PE-1, PE0, PE+1) umfasst, die dergestalt angeordnet sind, dass

- das von der Lichtquelle (LD) emittierte Lichtbündel an einem Aufspaltort (Pa) auf die Teilung (Gm1) des beweglichen Maßstabs (Mm) trifft, wo eine Aufspaltung in mehrere Teilstrahlenbündel erfolgt,
- die aufgespaltenen Teilstrahlenbündel dann auf die Teilung (Gf) des raumfesten Maßstabs (Mf) auftreffen, wo eine Rückreflexion in Richtung des beweglichen Maßstabs (Mm) erfolgt, wo die zurückreflektierten Teilstrahlenbündel versetzt zum Aufspaltort (Pa) auf Teilungen (Gm2a, Gm2b) des beweglichen Maßstabs (Mm) treffen, die in Messrichtung (Mr) ablenken und senkrecht zur Messrichtung (Mr) fokussieren, um nach einer Reflexion an Reflektoren (R1, R2) des beweglichen Maßstabs (Gm) erneut durch diese Teilungen (Gm2a, Gm2b) gebeugt zu werden und schließlich nach einer weiteren Beugung an der Teilung (Gf) des raumfesten Maßstabs (Mf) zum Vereinigungsort (Pb) auf der Teilung (Gm) des beweglichen Maßstabs (Gm) zu gelangen, an dem in zumindest einer Raumrichtung Lichtbündel austreten, die auf das zumindest eine Photoelement (PE-1, PE0, PE+1) in der Abtasteinheit (AE) gelangen, wo verschiebungsabhängig modulierte Photoströme resultieren.

18. Positionsmesseinrichtung nach Anspruch 1, wobei die Teilungsstriche der Teilungen (Gf, Gm) des raumfesten und des beweglichen Maßstabs (Mm, Mf) unter 45° geneigt zu den Außenkanten der jeweiligen Maßstäbe (Mm, Mf) angeordnet sind.

**Claims**

1. A position measuring device for measuring the relative position of an object relative to a tool (T), which has a tool center point (TCP), consisting of at least two scales (Mm, Mf; Mmx, Mfx; Mmy, Mfy), which are arranged so as to intersect and so as to be capable of being displaced relative to one another in at least one plane of movement (XY) and an associated optical scanning unit (AE; AEx, Aey; AE1, AE2, AE3), which generates position signals for at least one measuring direction (Mr) parallel to the plane of movement and each scale (Mm, Mf; Mmx, Mfx; Mmy, Mfy) encompasses a neutral point of rotation (NPm, NPf), about which a tipping of the respective scale (Mm, Mf; Mmx, Mfx; Mmy, Mfy) does not cause a change in the detected position and wherein

- the scanning optics ensures that the position of the neutral points of rotation (NPm, NPf) of the two scales (Mm, Mf; Mmx, Mfx; Mmy, Mfy) coincides and
- the arrangement of the scales (Mm, Mf, Mmx, Mfx, Mmy, Mfy) relative to the tool center point (TCP) ensures that the neutral points of rotation (NPm, NPf) of the two scales (Mm, Mf; Mmx, Mfx; Mmy, Mfy) and the tool center point (TCP) are located in one plane, which is located parallel to the plane of movement (XY).

2. The position measuring device according to claim 1, wherein the scanning optics comprises the following components:

- a scale (Mf) arranged in a fixed manner comprising a division (Gf),
- a scale (Mm) arranged so as to movable and so as to intersect relative to the scale (Mm), which is arranged in a fixed manner, comprising a division (Gm) as well as
- a scanning unit (AE; AEx, Aey; AE1, AE2, AE3), wherein the movable scale (Mm) is arranged below the fixed scale (Mf) and the scanning unit (AE; AEx, Aey; AE1, AE2, AE3) is arranged below the movable scale (Mm), so that the neutral points of rotation (NPm, NPf) of the two scales (Mf, Mf; Mmx, Mfx; Mmy, Mfy) are located in an area (B) between the two scales (Mm, Mf; Mmx, Mfx; Mmy, Mfy) or on the movable scale (Mm, Mmx, Mmy).

3. The position measuring device according to at least one of the preceding claims, wherein the position deviation of the neutral points of rotation (NPm, NPf) from the tool center point (TCP) at right angles to the plane of movement (XY) are smaller than 1 mm.

4. The position measuring device according to at least one of the preceding claims, wherein the division (Gm) of the movable scale (Mm) is attached to that scale side, which faces the fixed scale (Mf).

5. The position measuring device according to claim 4, wherein the division (Gm) of the movable scale (Mm) and the tool center point (TCP) are arranged in a plane, which is located parallel to the plane of movement (XY).

6. The position measuring device according to at least one of the preceding claims, wherein the division (Gm) of the movable scale (Mm) is embodied as transmitted light division.

7. The position measuring device according to at least one of the preceding claims, wherein the scanning unit (AE; AEx, Aey; AE1, AE2, AE3) comprises a light source (LD) as well as at least one photovoltaic cell (PE-1, PE0, PE+1), which are arranged such that

- the light beam emitted by the light source (LD) impinges on the division (Gm) of the movable scale (Mm) at a point of impingement (Pa), where a split-up into a plurality of partial beams of rays takes place,
- the split-up partial beams of rays then impinge on the division (Gf) of the fixed scale (Mf), where a retro reflection takes place in the direction of the movable scale (Mm), where the partial beams of rays, which are retro-reflected, are overlapped at a unification location (Pb) on the division (Gm) of the movable scale (Mm) and are brought into interference,
- light beams, which reach the at least one photovoltaic cell (PE-1, PE0, PE+1) in the scanning unit (AE; AEx, Aey; AE1, AE2, AE3) in at least one spatial direction where photoelectric currents result, which are modulated as a function of displacement, escape from the unification location (Pb) on the division (Gm) of the movable scale (Mm).

8. The position measuring device according to claim 7, wherein the scanning unit (AE; AEx, Aey; AE1, AE2, AE3) comprises a plurality of photovoltaic cells (PE-1, PE0, PE+1) and a plurality of light beams, which reach the plurality of photovoltaic cells (PE-1, PE0, PE+1) in different spatial directions where a plurality of phase-shifted photoelectric currents result, which are modulated as a function of displacement, escape at the unification location (Pb) on the division (Gm) of the movable scale (Mm).

9. The position measuring device according to claim 8, wherein the division (Gm) of the movable scale (Mm) is embodied with a line width of 1/3*dm and a phase height of 120°, wherein dm specifies the division period of the division (Gm) of the movable scale (Mm), so that phase-shifted photoelectric currents comprising a phase shift of 120° result at the photovoltaic cells (PE-1, PE0, PE+1).

10. The position measuring device according to claim 7, wherein the division (Gf) of the fixed scale (Mf) is embodied as reflection division.

11. The position measuring device according to claim 10, wherein the illumination angle of the light beam escaping from the light source (LD) is smaller than 20°.

12. The position measuring device according to claim 7, wherein the fixed scale (Mf) encompasses a division (Gf) as well as at least one reflector element (R, R1, R2) and are arranged such that

    - the split-up partial beams of rays impinge on the division (Gf) of the fixed scale (Mf), which deflects the partial beams of rays in measuring direction (Mr) and focuses them at right angles to the measuring direction (Mr),
    - the partial beams of rays are subsequently reflected through the at least one reflector element (R, R1, R2)
    - and in turn reach the division (Gf) of the fixed scale (Mf), which again deflects the partial beams of rays in measuring direction (Mr) and collimates them again at right angles to the measuring direction (Mr), so that they are reflected back in the direction of the movable scale (Mm).

13. The position measuring device according to claim 12, wherein the division (Gf) of the fixed scale (Mf) is embodied as diffractive structure, which represents an overlapping of a grid, which deflects in measuring direction (Mr) and a diffractive cylinder lens, which focuses at right angles to the measuring direction (Mr).

14. The position measuring device according to claim 7, wherein the fixed scale (Mf) comprises a division (Gf) as well as a prism (Pr) and the partial beams of rays impinging on the fixed scale (Mf) initially impinge on the division (Gf) of the fixed scale (Mf) deflecting the partial beams of rays in measuring direction (Mr), the partial beams of rays being subsequently reflected through the prism (Pr) and again reach the division (Gf) of the fixed scale (Mf), which again deflects the partial beams of rays in measuring direction (Mr), so that they are reflected back in the direction of the movable scale (Mm).

15. The position measuring device according to claim 14, wherein the prism (Pr) is embodied as a 90° roof prism.

16. The position measuring device according to claim 10 and 12, wherein the division (Gf) of the fixed scale (Mf) is embodied as rear surface reflection division.

17. The position measuring device according to at least one of claims 1-4, wherein the scanning unit (AE) comprises a light source (LD) as well as at least one photovoltaic cell (PE-1, PE0, PE+1), which are arranged such that

    - the light beam emitted by the light source (LD) impinges on the division (Gm1) of the movable scale (Mm) at a split-up location (PA), where a split-up into a plurality of partial beams of rays takes place,
    - the partial beams of rays split up in such a manner then impinge on the division (Gf) of the fixed scale (Mf) where a retro reflection takes place in the direction of the movable scale (Mm), where the partial beams of rays, which are retro-reflected, impinge on divisions (Gm2a, Gm2b) of the movable scale (Mm) offset to the division location (Pa), which deflect in measuring direction (Mr) and focus at right angles to the measuring direction (Mr), so as to be diffracted again by means of these divisions (Gm2a, Gm2b) after a reflection at reflectors (R1, R2) of the movable scale (Gm) and, after a further diffraction on the division (Gf) of the fixed scale (Mf), to subsequently reach the unification location (Pb) on the division (Gm) of the movable scale (Gm), where light beams escape in at least one spatial direction, with said light beams reaching the at least one photovoltaic cell (PE-1, PE0, PE+1) in the scanning unit (AE), where photoelectric currents result, which are modulated as a function of displacement.

18. The position measuring device according to claim 1, wherein the division lines of the divisions (Gf, Gm) of the fixed and of the movable scale (Mm, Mf) are arranged so as to be inclined at 45° to the outer edges of the respective scales (Mm, Mf).

**Revendications**

1. Dispositif de mesure de position pour le mesurage de la position relative d'un objet par rapport à un outil (T) possédant un Point central d'outil (TCP), constitué d'au moins deux échelles graduées (Mm, Mf ; Mmx, Mfx ; Mmy, Mfy) disposées en croix et déplaçables l'une par rapport à l'autre dans au moins un plan de déplacement (XY), et d'une unité de balayage optique (AE ; AEx, Aey ; AE1, AE2, AE3) correspondante, produisant des signaux de position pour au moins une direction de mesurage (Mr) parallèle au plan de déplacement, et dans lequel chacune des échelles graduées (Mm, Mf ; Mmx, Mfx ; Mmy, Mfy) comporte un point de rotation neutre (NPm, NPf), autour duquel un basculement de chacune des échelles graduées (Mm, Mf ; Mmx, Mfx ; Mmy, Mfy) ne produit aucune modification de la position détectée, et dans lequel

- l'optique de balayage permet de garantir que la position des points de rotation neutres (NPm, NPf) des deux échelles graduées (Mm, Mf ; Mmx, Mfx ; Mmy, Mfy) coïncide, et
- la disposition des échelles graduées (Mm, Mf ; Mmx, Mfx ; Mmy, Mfy) par rapport au Point central d'outil (TCP) permet de garantir que les points de rotation neutres (NPm, NPf) des deux échelles graduées (Mm, Mf ; Mmx, Mfx ; Mmy, Mfy) et le Point central d'outil (TCP) se trouvent dans un plan parallèle au plan de déplacement (XY).

2. Dispositif de mesure de position selon la revendication 1, dans lequel l'optique de balayage comprend les composants suivants :

- une échelle graduée (Mf) disposée fixement dans l'espace, avec une graduation (Gf),
- une échelle graduée (Mm) disposée de façon mobile et croisée par rapport à l'échelle graduée (Mf) disposée fixement dans l'espace, avec une graduation (Gm), et
- une unité de balayage (AE ; AEx, Aey ; AE1, AE2, AE3), l'échelle graduée mobile (Mm) étant disposée en-dessous de l'échelle graduée fixe (Mf), et l'unité de balayage (AE ; AEx, Aey ; AE1, AE2, AE3) étant disposée en-dessous de l'échelle graduée mobile (Mm), de sorte que les points de rotation neutres (NPm, NPf) des deux échelles graduées (Mm, Mf ; Mmx, Mfx ; Mmy, Mfy) se trouvent dans une région (B) entre les deux échelles graduées (Mm, Mf ; Mmx, Mfx ; Mmy, Mfy) ou sur l'échelle graduée mobile (Mm, Mmx, Mmy).

3. Dispositif de mesure de position selon au moins l'une des revendications précédentes, dans lequel les écarts de position des points de rotation neutres (NPm, NPf) du Point central d'outil (TCP) verticalement au plan de déplacement (XY) sont inférieurs à 1mm.

4. Dispositif de mesure de position selon au moins l'une des revendications précédentes, dans lequel la graduation (Gm) de l'échelle graduée mobile (Mm) se trouve du côté de l'échelle graduée qui est tourné vers l'échelle graduée fixe (Mf).

5. Dispositif de mesure de position selon la revendication 4, dans lequel la graduation (Gm) de l'échelle graduée mobile (Mm) et le Point central d'outil (TCP) sont disposés dans un plan parallèle au plan de déplacement (XY).

6. Dispositif de mesure de position selon au moins l'une des revendications précédentes, dans lequel la graduation (Gm) de l'échelle graduée mobile (Mm) est conçue comme une graduation de lumière transmise.

7. Dispositif de mesure de position selon au moins l'une des revendications précédentes, dans lequel l'unité de balayage (AE ; AEx, Aey ; AE1, AE2, AE3) comprend une source de lumière (LD) et au moins un élément photovoltaïque (PE-1, PE0, PE+1), disposés de telle manière que

- le faisceau lumineux émis par la source de lumière (LD) atteint un point d'incidence (Pa) sur la graduation (Gm) de l'échelle graduée mobile (Mm), où à lieu un fractionnement en plusieurs faisceaux partiels,
- les faisceaux partiels fractionnés atteignent alors la graduation (Gf) de l'échelle de graduation fixe (Mf), où a lieu une réflexion retour en direction de l'échelle graduée mobile (Mm), où les faisceaux partiels réfléchis à nouveau sont superposés en un point d'union (Pb) sur la graduation (Gm) de l'échelle graduée mobile (Mm) et mis en interférence,
- des faisceaux lumineux partent du point d'union (Pb) sur la graduation (Gm) de l'échelle graduée mobile (Mm), dans au moins une direction spatiale, et atteignent l'au moins un élément photovoltaïque (PE-1, PE0, PE+1) dans l'unité de balayage (AE ; AEx, Aey ; AE1, AE2, AE3), où résultent des flux photovoltaïques modulés en fonction du décalage.

8. Dispositif de mesure de position selon la revendication 7, dans lequel l'unité de balayage (AE ; AEx, Aey ; AE1, AE2, AE3) comprend plusieurs éléments photovoltaïques (PE-1, PE0, PE+1) et dans lequel plusieurs faisceaux lumineux partent dans différentes directions, à partir du point d'union (Pb) sur la graduation (Gm) de l'échelle graduée mobile (Mm), et atteignent les plusieurs éléments photovoltaïques (PE-1, PE0, PE+1), où résultent plusieurs flux photovoltaïques décalés en phase et modulés en fonction du décalage.

9. Dispositif de mesure de position selon la revendication 8, dans lequel la graduation (Gm) de l'échelle graduée mobile (Mm) est conçue comme une grille de phases, avec une épaisseur de trait de 1/3*dm et une hauteur de phase de 120°, où dm indique la période de graduation de la graduation (Gm) de l'échelle graduée mobile (Mm), de sorte que des flux photovoltaïques décalés en phase, avec un décalage de phase de 120° résultent sur les éléments photovoltaïques (PE-1, PE0, PE+1).

10. Dispositif de mesure de position selon la revendication 7, dans lequel la graduation (Gf) de l'échelle de graduation fixe (Mf) est conçue comme une graduation de réflexion.

11. Dispositif de mesure de position selon la revendication 10, dans lequel l'angle d'éclairage du faisceau lumineux partant de la source de lumière (LD) est inférieur à 20°.

12. Dispositif de mesure de position selon la revendication 7, dans lequel l'échelle de graduation fixe (Mf) comporte une graduation (Gf) ainsi qu'au moins un élément réfléchissant (R, R1, R2), tout en étant disposée de telle manière que

- les faisceaux partiels fractionnés atteignent la graduation (Gf) de l'échelle de graduation fixe (Mf), qui fait dévier les faisceaux partiels dans la direction de mesurage (Mr) et les concentre perpendiculairement à la direction de mesurage (Mr),
- les faisceaux partiels sont ensuite réfléchis à travers l'au moins un élément réfléchissant (R, R1, R2),
- et atteignent à nouveau la graduation (Gf) de l'échelle de graduation fixe (Mf), qui fait à nouveau dévier les faisceaux partiels dans la direction de mesurage (Mr) et les concentre à nouveau perpendiculairement à la direction de mesurage (Mr), de sorte qu'ils sont à nouveau réfléchis dans la direction de l'échelle graduée mobile (Mm).

13. Dispositif de mesure de position selon la revendication 12, dans lequel la graduation (Gf) de l'échelle de graduation fixe (Mf) est conçue comme une structure diffractive, représentant une superposition d'une grille de déviation dans la direction de mesurage (Mr) et d'une lentille cylindrique diffractive de concentration dans la direction de mesurage (Mr).

14. Dispositif de mesure de position selon la revendication 7, dans lequel l'échelle de graduation fixe (Mf) comprend aussi bien une graduation (Gf) qu'un prisme (Pr), et dans lequel les faisceaux partiels atteignant l'échelle de graduation fixe (Mf) atteignent tout d'abord la graduation (Gf) sur l'échelle de graduation fixe (Mf), qui fait dévier les faisceaux partiels dans la direction de mesurage (Mr), puis les faisceaux partiels sont réfléchis à travers le prisme (Pr) et atteignent à nouveau la graduation (Gf) de l'échelle de graduation fixe (Mf), qui fait à nouveau dévier les faisceaux partiels dans la direction de mesurage (Mr), de sorte qu'ils sont à nouveau réfléchis dans la direction de l'échelle graduée mobile (Mm).

15. Dispositif de mesure de position selon la revendication 14, dans lequel le prisme (Pr) est conçu comme un prisme en toit de 90°.

**16.** Dispositif de mesure de position selon les revendications 10 et 12, dans lequel la graduation (Gf) de l'échelle de graduation fixe (Mf) est conçue comme une graduation de réflexion de surfaces arrières.

**17.** Dispositif de mesure de position selon au moins l'une des revendications 1 à 4, dans lequel l'unité de balayage (AE) comprend une source de lumière (LD) ainsi qu'au moins un élément photovoltaïque (PE-1, PE0, PE+1), qui sont disposés de telle manière que

- le faisceau lumineux émis par la source de lumière (LD) atteint un point de fractionnement (Pa) sur la graduation (Gm1) de l'échelle graduée mobile (Mm), où a lieu un fractionnement en plusieurs faisceaux partiels,
- les faisceaux partiels fractionnés atteignent ensuite la graduation (Gf) de l'échelle de graduation fixe (Mf), où a lieu une réflexion retour dans la direction de l'échelle graduée mobile (Mm), où les faisceaux partiels à nouveau réfléchis atteignent les graduations (Gm2a, Gm2b) de l'échelle graduée mobile (Mm), en décalage par rapport au point de fractionnement (Pa), qui produisent une déviation dans la direction de mesurage (Mr) et une concentration perpendiculairement à la direction de mesurage (Mr), pour être à nouveau courbés par ces graduations (Gm2a, Gm2b), après une réflexion sur des éléments réfléchissants (R1, R2) de l'échelle graduée mobile (Mm), et atteignent finalement le point d'union (Pb) sur la graduation (Gm) de l'échelle graduée mobile (Mm), après une nouvelle courbure sur la graduation (Gf) de l'échelle de graduation fixe (Mf), d'où partent des faisceaux lumineux dans au moins une direction spatiale, lesquels atteignent l'au moins un élément photovoltaïque (PE-1, PE0, PE+1) dans l'unité de balayage (AE), où résultent des flux photovoltaïques modulés en fonction du décalage.

**18.** Dispositif de mesure de position selon la revendication 1, dans lequel les traits de graduation des graduations (Gf, Gm) de l'échelle de graduation fixe et de l'échelle graduée mobile (Mm, Mf) sont disposés de façon inclinée de 45° par rapport aux arêtes extérieures de chacune des échelles graduées (Mm, Mf).

FIG. 1

Ch    Ob

Ex

TCP

Mfx    AEx

T

Mmx

AEy    Mmy

Ey    Mfy

Stand der Technik

FIG. 2

FIG. 3

FIG. 4a

FIG. 4b

FIG. 5

Mf

Gf

Pb

Pa

Gm

Mr

Mm

PE-1

PE0

PE+1

L

LD

AE

FIG. 6

T

Ch

Mfx

Mmy

Ex

AEx

Mmx

Ey

AEy

Mfy

FIG. 7a

FIG. 7b

FIG. 8a

Mf    R1    Mr    R2

Z
Y⊗——→X

Gf

FIG. 8b

⊙ Mr

Mf    OA    R1, R2

Z
X⊗——→Y

Gf

S    S

FIG. 9

Mr

GfA GfB

df    df/2    df/2

Gf

Y
Z    X

FIG. 10

FIG. 11a

FIG. 11b

FIG. 12a

Mf   $\overrightarrow{Mr}$   Gf

R

FIG. 12b

Mf   Mr ⊙   Gf

R

FIG. 13a

FIG. 13b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2521618
- EP 1734394 A1
- WO 2007034379 A2
- EP 1837630 A1
- EP 163362 B1
- DE 102005029917 A1
- DE 102006042743